# EUROPÄISCHE PATENTANMELDUNG

(11) **EP 2 184 032 A1**
(43) Veröffentlichungstag der Anmeldung: **12.05.2010**
(21) Anmeldenummer: 08019330.3
(22) Anmeldetag: 05.11.2008
(51) Int. Cl.: A61C 17/22, A46B 9/04

(54) **Elektrische Zahnbürste sowie Bürstenkopf hierfür**

(71) Anmelder: Braun GmbH, 61476 Kronberg/Taunus (DE)
(72) Erfinder: Driesen, Georges, 61276 Weilrod (DE); Reick, Hansjörg, 61449 Steinbach (DE); Schamberg, Stefan, 61250 Usingen (DE); Schmid, Michael, 60599 Frankfurt/Main (DE); Schaefer, Norbert, 60320 Frankfurt/Main (DE); Thurnay, Eva, Susamme, Dominique, 65929 Frankfurt/Main (DE); McGarry, Rory, 60385 Frankfurt/Main (DE)

(57) **Zusammenfassung**

Die vorliegende Erfindung betrifft eine elektrische Zahnbürste sowie einen antreibbaren Bürstenkopf hierfür mit einem vorzugsweise etwa plattenförmigen Borstenträger, der Lagermittel zur beweglichen Lagerung des Borstenträgers aufweist, sowie einer Mehrzahl von Borstenbüscheln, die in mehreren ineinanderliegenden Ringen auf dem Borstenträger angeordnet sind, wobei auf einem äußeren Ring auf gegenüberliegenden Seiten längliche Borstenbüschel mit einem länglichen Büschelquerschnitt angeordnet sind und auf einem inneren Ring mehrere Borstenbüschel angeordnet sind, die jeweils einen Querschnitt kleiner als der Querschnitt der länglichen Borstenbüschel des äußeren Rings besitzen. Erfindungsgemäß sind innerhalb der länglichen Borstenbüschel auf dem äußeren Ring auf einem mittleren Ring mehrere Borstenbüschel mit einem Querschnitt kleiner als der Querschnitt der länglichen Borstenbüschel angeordnet und wiederum innerhalb dieser kleinen Borstenbüschel auf dem mittleren Ring ist zumindest ein Borstenbüschel mit einem Querschnitt größer als der Querschnitt der Borstenbüschel des mittleren Rings vorgesehen. Durch diese rhythmische Abwechslung der Büschelquerschnitte von innen nach außen lässt sich eine hohe Borstendichte erreichen und eine Kollision der Befestigungsmittel besser vermeiden. Zum anderen ergeben sich auch Vorteile hinsichtlich der Putzwirkung. Unter anderem wird die üblicherweise im Zentrum des Borstenfelds aufgebrachte Zahnpasta besser auf der Arbeitsfläche gehalten.

## Beschreibung

Die vorliegende Erfindung betrifft eine elektrische Zahnbürste sowie einen antreibbaren Bürstenkopf hierfür mit einem vorzugsweise etwa plattenförmigen Borstenträger, der Lagermittel zur beweglichen Lagerung des Borstenträgers aufweist, sowie einer Mehrzahl von Borstenbüscheln, die in mehreren ineinanderliegenden, entweder kreisförmig oder nicht kreisförmig (z. B. oval), Ringen auf dem Borstenträger angeordnet sind, wobei auf einem äußeren Ring auf gegenüberliegenden Seiten längliche Borstenbüschel mit einem länglichen Büschelquerschnitt angeordnet sind und auf einem inneren Ring mehrere Borstenbüschel angeordnet sind, die jeweils einen Querschnitt kleiner als der Querschnitt der länglichen Borstenbüschel des äußeren Rings besitzen.

Bei antreibbaren Borstenfeldern ist es bisweilen schwierig, eine hohe Borstendichte auf dem Borstenträger zu realisieren, insbesondere dann, wenn die Borstenbüschel im sog. Ankerstopfverfahren an dem Borstenträger befestigt werden sollen. Einerseits sind antreibbare Borstenträger elektrischer Zahnbürsten flächenmäßig recht klein, um - insbesondere bei rotatorisch oszillierendem Antrieb - die Antriebsbewegung auf die Zahnflächen zu konzentrieren. Zum anderen sind bei antreibbaren Borstenfeldern besondere Büschelkonfigurationen erwünscht. Beispielsweise werden an runden Borstenträgern, die rotatorisch oszillierend angetrieben werden, im Bereich der Zahnbürstenlängsachse gerne sog. Powertips angebrachts, d.h. Zahnbürstenbüschel, die eine größere Höhe besitzen und über die restlichen Büschel vorspringen, so dass sie in Zahnzwischenräume eindringen können. Solche Borstenbüschel am Außenumfang des Borstenträgers besitzen sinnvollerweise eine längliche Kontur mit einem schmalen, langgestreckten Büschelquerschnitt, wodurch einerseits die interdentale Reinigungswirkung verbessert werden kann und andererseits auf das Borstenfeld aufgebrachte Zahnpasta besser auf der Arbeitsfläche gehalten werden kann.

Beispielsweise zeigt die EP 0835081 B1 an einem kreisrunden, rotatorisch antreibbaren Borstenfeld im Bereich der Längsachse am Umfang des Borstenfelds angeordnete Borstenbüschel, die über die weiter innen angeordneten Büschel hinausragen. Derartige verlängerte Borstenbüschel am Außenumfang des Borstenfelds ermöglichen zwar in der Tat eine verbesserte Reinigung der Zahnzwischenräume, jedoch ist die Reinigung der an die Interdentalräume angrenzenden Zahnflankenabschnitte noch nicht optimal. Zum anderen lassen sich derartige Borstenfeldkonfigurationen nicht mehr wirklich sanft von Zahn zu Zahn bewegen, so dass bei Putzbewegungen in Zahnbürstenlängsrichtung der Bürstenkopf ein stoßendes Gefühl erzeugen.

In ähnlicher Weise ausgebildete Büstenköpfe, die rotatorisch antreibbar sind und eine zentrale Ausnehmung bzw. Vertiefung in der Arbeitsfläche des Borstenfelds besitzen, sind aus der US-D 478,214, US-D 517,325 oder der US-D 455,556 bekannt.

Längliche Borstenbüschel am Außenumfang des Borstenfelds verschärfen jedoch das zuvor genannte Problem, bei Befestigung der Borstenbüschel im Ankerstopfverfahren eine hohe Borstendichte auf dem Borstenträger realisieren zu können, da derartige längliche Borstenbüschel mit mehreren Ankern befestigt werden müssen, die einen entsprechenden Platzbedarf haben.

Hiervon ausgehend liegt der vorliegenden Erfindung die Aufgabe zugrunde, eine verbesserte elektrische Zahnbürste sowie einen verbesserten Bürstenkopf hierfür zu schaffen, die Nachteile des Standes der Technik vermeiden und Letzteren in vorteilhafter Weise weiterbilden. Insbesondere soll eine hohe Borstendichte auf dem Borstenträger realisierbar sein, ohne möglichst auf die Möglichkeit der Befestigung der Borstenbüschel im Ankerstopfverfahren zu verzichten.

Diese Aufgabe wird erfindungsgemäß durch einen Bürstenkopf nach Anspruch 1 sowie eine elektrische Zahnbürste nach Anspruch 30 gelöst. Bevorzugte Ausgestaltungen der Erfindung sind Gegenstand der abhängigen Ansprüche.

Somit ist vorzugsweise in einem Zentralbereich des Borstenfeldes eine erhöhte Dichte an Borstenenden vorgesehen, die eine zentrale Auflagefläche für den Zahn bilden und ein weiteres Einsinken über die Borstenlänge in Folge der Borstendichte verhindern. Diese erhöhte Dichte an Borstenenden eines zentralen Borstenfeldes kann erreicht werden, durch mehrere unmittelbar aneinander angrenzende (< 1,5 mm oder 1 mm) Borstenbüschel, Borstenbüschel die zu einem gemeinsamen größeren Borstenbüschel zusammengefasst werden (die aber mehr als einen Ankerbestopfungsdraht zu deren Befestigung erfordern) oder/und Borstenbüschel die vom plattenförmigen Borstenträger ausgehend zueinander geneigt angeordnet sind, so dass die Borstenenden ein dichtes Borstenfeld im Wesentlichen ohne Bestopfungslücke bilden. Diese Dichte an Borstenenden des zentralen Borstenfeldes kann durch eine der obigen oder beliebigen Kombinationen der obigen drei Maßnahmen erreicht werden.

Es wird also vorgeschlagen, querschnittsflächenmäßig große Borstenbüschel am äußeren Rand des Borstenfelds sowie in dessen Zentralbereich zu konzentrieren und zwischen diese großflächigen Borstenbüscheln am Rand und im Zentrum auf einem mittleren Borstenbüschelring querschnittsflächenmäßig kleine Borstenbüschel vorzusehen und durch geschickte Auswahl der Querschnittsgeometrien und deren Ausrichtung relativ zueinander eine Kollision der Büschelbefestigungsmittel zu vermeiden, auch wenn die Borsten in großer Dichte angeordnet werden. Erfindungsgemäß sind innerhalb der länglichen Borstenbüschel auf dem äußeren Ring auf einem mittleren Ring mehrere Borstenbüschel mit einem Querschnitt kleiner als der Querschnitt der länglichen Borstenbüschel angeordnet und wiederum innerhalb dieser kleinen Borstenbüschel auf dem mittleren Ring ist zumindest ein Borstenbüschel mit einem Querschnitt größer als der Querschnitt der Borstenbüschel des mittleren Rings vorgesehen. Durch diese rhythmische Abwechslung der Büschelquerschnitte von innen nach außen lässt sich eine hohe Borstendichte erreichen und eine Kollision der Befestigungsmittel besser vermeiden. Zum anderen ergeben sich auch Vorteile hinsichtlich der Putzwirkung. Es sei angemerkt, dass die Borsten auch in anderen Zusammenlegungen als mittels Borstenbüscheln vorgesehen sein können. Jede Bezugnahme auf die Borstenbüschel kann daher alternativ auch als eine Bezugnahme auf eine Mehrzahl von Borsten gemäß dieser Erfindung, wie oben und unten und in den Ansprüchen beschrieben, angesehen werden. Darüber hinaus können alternativ statt Borsten andere Arten von Zahnreinigungselementen verwendet werden. Ferner können die Borstenbüschel, wie in diesem Zusammenhang beschrieben, nicht auf äußeren, mittleren und inneren Ringen, sondern relativ zueinander angeordneten äußeren, mittleren oder inneren Bereichen angeordnet sein.

Unter anderem wird die üblicherweise im Zentrum des Borstenfelds aufgebrachte Zahnpasta besser auf der Arbeitsfläche gehalten.

In Weiterbildung der Erfindung sind auf dem zumindest einen mittleren Borstenring Borstenbüschel unterschiedlicher Querschnittsformen angeordnet. Insbesondere können auf dem genannten zumindest einen mittleren Ring Borstenbüschel vorgesehen sein, die einen etwa quadratischen Büschelquerschnitt besitzen. Alternativ oder zusätzlich können auf dem genannten mittleren Ring auch Borstenbüschel mit einem runden Querschnitt, insbesondere kreisrunden Querschnitt vorgesehen sein. Sind sowohl eckige, insbesondere quadratische als auch runde, insbesondere kreisrunde Borstenbüschel auf dem genannten mittleren Ring angeordnet, sind diese vorteilhafterweise jeweils in verschiedenen Sektoren konzentriert. Hierfür bestehen grundsätzlich verschiedene Möglichkeiten. Nach einer vorteilhaften Ausführung der Erfindung ist vorgesehen, dass runde Borstenbüschel auf dem mittleren Ring in gegenüberliegenden Sektoren angeordnet sind, die in der unausgelenkten Neutralstellung des Borstenträgers die Zahnbürstenlängsachse enthalten. Die eckigen Borstenbüschel des mittleren Rings sind hingegen vorteilhafterweise in gegenüberliegenden Sektoren des Borstenträgers angeordnet, die in der Neutralstellung des Borstenträgers symmetrisch zu einer Querachse angeordnet sind.

Um günstige Platzverhältnisse für die Befestigung der Borstenbüschel zu schaffen, kann in Weiterbildung der Erfindung vorgesehen sein, dass die eckigen Borstenbüschel des mittleren Rings, zumindest einige hiervon, gegenüber den Hauptachsen des Borstenträgers und auch gegenüber der Ringkontur des Rings, auf dem sie angeordnet sind, spitzwinklig verdreht sind. Insbesondere kann zumindest eines der eckigen Borstenbürschel, vorzugsweise jedes zweite eckige Borstenbüschel mit seiner Hauptachse derart verdreht sein, dass die Hauptachse des Borstenbüschelquerschnitts spitzwinklig zu einer Tangentialen an den mittleren Ring geneigt ist. Hierdurch werden entsprechende Ankerplättchen entsprechend aus dem Kollisionsbereich anderer Ankerplättchen herausgedreht. Zudem kann das Biegeverhalten des Borstenfelds insgesamt homogener und insbesondere weniger richtungsabhängig ausgebildet werden.

Die Borstenbüschel des mittleren Rings besitzen ungeachtet ihrer verschiedenen Büschelquerschnittsformen zumindest näherungsweise etwa dieselbe Querschnittsfläche, wobei sich die Querschnittsflächen in einem Bereich von vorzugsweise weniger als +/-25% variieren.

Im Vergleich zu den Querschnittsflächen der Borstenbüschel des mittleren Rings sind die äußeren länglichen Borstenbüschel auf dem äußeren Ring sowie das zumindest eine innerste Borstenbüschel im Zentrum des Borstenfelds hinsichtlich der Querschnittsfläche mindestens doppelt so groß.

Auf dem äußeren Ring des Borstenfelds können hierbei vorteilhafterweise mehrere jeweils einander gegenüberliegende Paare von länglichen Borstenbüscheln angeordnet sein. Um eine bessere Anpassung der Borstenkonfiguration an die unterschiedlichen Putzaufgaben in unterschiedlichen Bereichen des Borstenfelds zu erreichen, können hierbei auf dem genannten äußeren Ring verschieden ausgebildete Paare von länglichen Borstenbüscheln vorgesehen sein, die hinsichtlich ihrer Borstenlänge und/oder Höhe und/oder Querschnittsfläche unterschiedlich ausgebildet sind.

Hierbei sind grundsätzlich verschiedene Konfigurationen möglich. Nach einer vorteilhaften Ausführung der Erfindung sind in gegenüberliegenden Sektoren des Borstenträgers, die in dessen unausgelenkter Neutralstellung die Zahnbürstenlängsachse enthalten, längere und/oder hinsichtlich der Querschnittsfläche größere längliche Borstenbüschel vorgesehen als in dazu senkrecht orientierten Sektoren quer zur Zahnbürstenlängsachse.

Zusätzlich zu den länglichen Borstenbüscheln können auf dem äußeren Ring vorteilhafterweise weitere Borstenbüschel mit nicht länglicher Kontur vorgesehen sein, die vorteilhafterweise einen näherungsweise runden oder quadratischen Querschnitt besitzen können, dessen Querschnittsfläche kleiner ist als die Querschnittsfläche der länglichen Borstenbüschel.

In dem Zentralbereich des Borstenfelds sind nach einer vorteilhaften Weiterbildung der Erfindung zwei ebenfalls längliche Borstenbüschel vorgesehen, deren Längsachse, d.h. die Längserstreckung des länglichen Querschnitts, jeweils parallel zu einer Hauptachse des Borstenträgers ausgerichtet sind. Insbesondere können die genannten innersten Borstenbüschel mit ihren Längsachsen in der unausgelenkten Neutralstellung des Borstenträgers parallel zur Zahnbürstenlängsachse orientiert sein und/oder auf die länglichen Borstenbüschel des äußeren Rings hin orientiert sein, die auf dem äußeren Ring die größte Höhe und/oder größte Querschnittsfläche besitzen.

Der Borstenträger und/oder das Borstenfeld kann grundsätzlich verschiedene Außenumrisskonturen besitzen, wobei der Borstenträger insbesondere bei rotatorischem Antrieb des Borstenträgers vorteilhafterweise rund ausgebildet ist. In besonders vorteilhafter Weiterbildung der Erfindung ist der Borstenträger hierbei jedoch nicht kreisrund ausgebildet, sondern mit einer von der Kreisform abweichenden Form versehen. Insbesondere kann der Borstenträger oval oder ellipsenförmig oder in ähnlicher Weise leicht flachgedrückt ausgebildet sein. Alternativ oder zusätzlich kann zumindest die äußere Reihe bzw. der äußere Ring von Borstenbüscheln auf einem Oval oder einer Ellipse bzw. einem in ähnlicher Weise flachgedrückten Ring angeordnet sein.

Die Borstenbüschel sind hierbei in der Draufsicht auf den Borstenträger betrachtet vorteilhafterweise symmetrisch bezüglich der Hauptachsen des Borstenträgers und/oder rotationssymmetrisch angeordnet, insbesondere derart, dass die Borstenbüschel bzw. ihre Befestigungsorte auf dem Borstenträger durch eine 180-Grad-Drehung ineinander überführbar sind.

Alternativ oder zusätzlich kann das Borstenfeld jedoch in einer Seitenansicht betrachtet, insbesondere quer zur Zahnbürstenlängsachse, eine asymmetrische Konturierung besitzen, insbesondere dergestalt, dass das Höhenprofil zu einer Seite hin stärker ansteigt als zur anderen.

In Weiterbildung der Erfindung besitzt das Borstenfeld eine zentrale Vertiefung in den von den freien Enden der Borstenbüschel definierten Arbeitsfläche, die vorteilhafterweise einen rinnenförmigen Boden besitzen kann, der in eine Richtung gewölbt ist und in der dazu senkrechten Richtung im Wesentlichen gerade ausgebildet ist. Durch eine derartige, im Wesentlichen einachsig gewölbte Senke in einem mittleren Abschnitt des Borstenfeldes bzw. dessen Arbeitsoberfläche kann nicht nur ein besseres Aufnehmen der Zahnpaste oder eines ähnlichen, gelartigen Zahnreinigungsmittels erreicht werden, sondern vor allen Dingen eine bessere Zahnreinigungswirkung mit einem angenehmeren, sanfteren Putzgefühl. Die zu gegenüberliegenden Umfangsseiten hin ansteigende Kontur der Arbeitsfläche schmiegt sich besser an die seitlichen Zahnflanken an, die sozusagen passgenau eingehüllt werden, so dass insbesondere auch die an die Zahnzwischenräume angrenzenden Abschnitte der Zahnflanken besser gereinigt werden.

Im Gegensatz zu Borstenfeldern mit ebenen Vertiefungen in der Mitte müssen sich nicht erst die allerinnersten, d.h. mittigen Büschel wegbiegen. Vielmehr schmiegen sich die Borstenbüschel auch bereits ohne Wegbiegen passgenau an die Seitenflanken der Zähne an. Zudem ergibt sich ein sanfteres Putzgefühl, insbesondere beim Hinwegbewegen des Bürstenkopfs von einem Zahn zum nächsten, da aufgrund der variierenden Borstenbüschelhöhe auch im zentralen Bereich beim Hinwegschieben über eine Zahnflanke nacheinander einzelne Büschel weggedrückt werden bzw. der Bürstenkopf sozusagen entlang der gewölbten Oberfläche der Vertiefung um die Flanke des nächsten Zahns herumgeschoben wird, ohne dass der Bürstenkopf sozusagen in die Vertiefung fallen würde. Insbesondere auch bei rotatorischem Antrieb des Borstenfelds ergibt sich überdies eine sanfte Wischbewegung, da die sich um die Zahnflanke schmiegenden Borstenbüschel mit zunehmendem Abstand von der Rotationsachse stärker gebogen werden.

Die rinnenförmige Wölbung des vertieften, zentralen Abschnitts der Borstenfeldoberfläche kann grundsätzlich auf verschiedene Art und Weise erzielt werden. Beispielsweise könnte bei an sich gleichbleibender Länge der Borstenbüschel ein entsprechend gewölbter Borstenträger vorgesehen sein. In Weiterbildung der Erfindung jedoch variieren die Borstenbüschel, insbesondere auch die innen liegenden Borstenbüschel in ihrer Länge derart, dass sie mit ihren freien Enden die genannte rinnenförmige Wölbung definieren. Insbesondere kann die Länge der innen liegenden Borstenbüschel in Richtung der Verwölbung der von den freien Enden definierten Arbeitsfläche mit zunehmendem Abstand von einem Mittelpunkt des Borstenträgers zunehmen derart, dass die genannte rinnenförmige Verwölbung der zentralen Vertiefung definiert wird. Durch eine solchermaßen variierende Länge der Borstenbüschel kann ein sanftes Putzempfinden und ein sanftes Hinwegbewegen des Borstenfelds über die Zähne erzielt werden, da die weiter vorstehenden Borsten aufgrund ihrer größeren Länge sich leichter wegbiegen können.

Um eine möglichst kontinuierliche Verwölbung der Oberfläche der zentralen Vertiefung zu erzielen, besitzen die freien Enden der inneren Borstenbüschel, die die genannte Arbeitsfläche im Bereich der Vertiefung definieren, keine parallel zum Borstenträger verlaufenden Stirnseiten, sondern zur Oberfläche des Borstenträgers spitzwinklig geneigte Stirnflächen, wobei verschiedene innere Borstenbüschel unterschiedlich geneigte Stirnfläche besitzen derart, dass die verschieden geneigten Stirnflächen einander ergänzend den besagten rinnenförmigen Konturverlauf der zentralen Vertiefung definieren. Insbesondere kann die Neigung der Stirnflächen der freien Enden der Borstenbüschel mit zunehmendem Abstand der Borstenbüschel von der Mitte des Borstenträgers zunehmend stärker ausgebildet sein, wodurch sich zu den Umfangsrändern des Borstenfelds hin eine zunehmend steilere Wandung des rinnenförmigen Bodens ergibt.

Grundsätzlich können die Borstenbüschel an ihren freien Enden eine ebene Oberfläche bilden. In diesem Fall definieren die inneren Borstenbüschel die genannte rinnenförmige Wölbung sozusagen in Knickspantform mit von Büschel zu Büschel stufenweise zunehmender Schrägung.

In bevorzugter Weiterbildung der Erfindung jedoch können die freien Enden der inneren Büschel an ihren freien Enden eine nicht ebene, sondern vielmehr bogenförmig gewölbte Stirnfläche besitzen derart, dass die einander ergänzenden freien Enden benachbarter Borstenbüschel eine kontinuierlich gewölbt Hüllfläche definieren, die die zuvor genannte rinnenförmige Senke bildet. Die gewölbten Stirnflächen der einzelnen Büschel sind hierbei vorteilhafterweise einachsig verwölbt, d.h. in sich selbst bereits rinnenförmig gewölbt, so dass sie in einer Richtung einen geradlinigen Verlauf besitzen, während sie in einer dazu senkrechten Richtung eine Wölbung haben.

Der rinnenförmig gewölbte Boden des Zentralbereichs der Arbeitsfläche des Borstenfelds kann grundsätzlich symmetrisch ausgebildet sein, d.h. einen im Wesentlichen parabelförmigen Verlauf besitzen. In diesem Fall steigen die inneren Borstenbüschel mit ihren freien Enden zu gegenüberliegenden Umfangsseiten des Borstenfelds hin im Wesentlichen gleich stark an.

In Weiterbildung der Erfindung jedoch kann vorteilhafterweise auch ein asymmetrischer Verlauf der Wölbung der zentralen Vertiefung in der Arbeitsfläche des Borstenfelds vorgesehen sein, wobei insbesondere eine bananenförmige Rinnenwölbung vorgesehen sein kann. Hierbei steigen vorteilhafterweise die Borstenbüschel, die die zentrale Vertiefung in der Arbeitsfläche des Borstenfelds definieren, zu gegenüberliegenden Umfangsseiten hin ungleich an, so dass der eine obere Rand der rinnenförmigen Vertiefung höher ist als der gegenüberliegende Rand. Hierdurch kann unter anderem die Tendenz von Benutzern kompensiert werden, den Bürstekopf nicht exakt tangential an die Zahnflanken anzulegen, sondern alternativ in einer vorzugsweise leicht V-förmigen Anstellung.

Um eine weiter verbesserte Reinigungswirkung bezüglich der Zahnzwischenräume zu erzielen, besitzen in Weiterbildung der Erfindung die äußeren, längeren bzw. höheren Borstenbüschel jeweils zumindest eine Abschrägung an den endseitigen Stirnflächen. Insbesondere können die seitlichen Kanten der Stirnflächen nach Art einer Fase angeschrägt sein. Hierdurch können einerseits die genannten längeren äußeren Borstenbüschel besser in die Zahnzwischenräume eindringen. Zum anderen lässt sich der Bürstenkopf auch leichter und sanfter von Zahn zu Zahn bewegen, da die Anschrägungen der umfangsseitig außen liegenden Borstenbüschel das Borstenfeld sozusagen nach Art einer keilförmigen Schrägfläche auf die nächste Zahnflanke heben.

Die äußeren, längeren Borstenbüschel können hierbei grundsätzlich sowohl zur inneren Seite hin als auch zur äußeren Seite hin abgeschrägt sein. In vorteilhafter Ausführung der Erfindung ist hierbei jedoch nur eine Abschrägung auf einer der Seiten des jeweiligen Borstenbüschels vorgesehen, so dass eine ausreichend breite, nicht abgeschrägte Stirnfläche verbleibt, wodurch gleichermaßen in den Zahnzwischenräumen als auch auf den Zahnflanken eine Putzwirkung erzielt wird.

In besonders vorteilhafter Weiterbildung der Erfindung sind hierbei die äußeren, d.h. den inneren Borstenbüscheln abgewandten Kanten der freien Enden der Borstenbüschel abgeschrägt. Hierdurch lässt sich der Bürstenkopf besonders sanft von Zahn zu Zahn schieben.

Alternativ oder zusätzlich kann auch die innenseitige Kante der Stirnfläche der genannten äußeren, längeren Borstenbüschel die Abschrägung aufweisen. Hierdurch schmiegt sich die Arbeitsfläche des Borstenfelds besonders passgenau an die bauchigen Zahnflanken an. Die innenseitige Abschrägung setzt sozusagen die rinnenförmig gewölbte Vertiefung im Zentrum der Arbeitsfläche des Borstenfelds fort.

Alternativ oder zusätzlich kann auch die innenseitige Kante der Stirnfläche der genannten äußeren, kürzeren Borstenbüschel - quer zur Längsrichtung der Bürste - die Abschrägung aufweisen. Dies ermöglicht eine verbesserte Reinigungswirkung im Gingival-Zahnbereich.

Je nach Anwendungsfall und Ausbildung der Borstenbüschel kann die Abschrägung an den umfangsseitigen, längeren Borstenbüscheln unterschiedlich stark ausgebildet sein. Eine gute Putzwirkung sowohl zwischen den Zähnen als auch auf deren Oberflächen lässt sich erzielen, wenn die genannte Abschrägung der umfangsseitigen Borstenbüschel unter einem Winkel von etwa 20° bis 60°, bevorzugt 25° bis 40°, gegenüber der nicht abgeschrägten Stirnfläche des genannten Borstenbüschels geneigt ist. Die Tiefe der Abschrägung kann hierbei grundsätzlich verschieden gewählt sein, wobei es sich als vorteilhafter Kompromiss zwischen Leichtgängigkeit in die Zahnzwischenräume und verbleibender Putzfähigkeit auf den Zahnflanken erweist, wenn die genannte Abschrägung sich über etwa 25 % bis 75 % der Breite des Borstenbüschels an dessen Ende erstreckt. Mit "Breite" ist dabei die Erstreckung des Borstenbüschels senkrecht zu seiner Längsachse und quer zur Längsrichtung der Abschrägung gemeint.

Besonders wirkungsvoll sind die umfangsseitigen, längeren äußeren Borstenbüschel, insbesondere in Verbindung mit den genannten Abschrägungen, dann, wenn die genannten Borstenbüschel zumindest mit ihrer Außenseite gegenüber einer Senkrechten auf den Borstenträger spitzwinklig zur Außenumfangsseite hin geneigt sind, und zwar vorzugsweise unter einem Winkel im Bereich von 1,5° bis 15°, vorzugsweise etwa 3° bis 10°. Hierdurch erhalten die Borstenbüschel beim Hin- und Herbewegen des Bürstenkopfs in eine Richtung eine reduzierte Knicksteifigkeit, wodurch sich ein besseres Einschieben in die Zahnzwischenräume ergibt.

In vorteilhafter Weiterbildung der Erfindung besitzen die genannten längeren äußeren Borstenbüschel eine sich zu ihren freien Enden hin vergrößernde Querschnittsfläche und/oder vom Borstenträger weg auseinanderlaufende Seitenflanken. Insbesondere können die genannten umfangsseitig äußeren Borstenbüschel bei Betrachtung eines Längsschnitts trapezförmig ausgebildet sein, derart, dass die freien Enden des Büschels breiter als dessen Basis am Borstenträger ist. Durch eine derart trapezförmige Ausbildung der Borstenbüschel erhalten diese einerseits eine größere Arbeitsoberfläche an ihren freien Enden. Andererseits werden die Borsten innerhalb eines Büschels durch die fächerartige Aufspreizung leichter beweglich zueinander, wodurch sich insgesamt eine bessere Anpassung an die Zahnkontur und eine verbesserte Putzleistung ergibt. Insbesondere bei seitlichen Abschrägungen der freien Enden der Borstenbüschel erhalten diese günstige Geometrieverhältnisse mit spürbareren Kanten, die sich besser an die Übergangskonturen der Zähne anschmiegen.

Die trapezoide Ausbildung der äußeren, längeren Borstenbüschel ist hierbei vorteilhafterweise asymmetrisch bezüglich einer Senkrechten auf den Borstenträger ausgebildet. Insbesondere kann sich eine Innenflanke der genannten Borstenbüschel, die den inneren Borstenbüscheln zugewandt ist, im Wesentlichen senkrecht zur Oberfläche des Borstenträgers erstrecken, während eine Außenseite des jeweiligen Borstenbüschels, die den inneren Borstenbüscheln abgewandt ist, gegenüber einer senkrechten auf dem Borstenträger spitzwinklig zur Außenseite hin geneigt ist. Die äußeren Flanken stehen also schräg nach außen ab, während die inneren Flanken gerade stehen, das heißt im Wesentlichen senkrecht zur Borstenträgeroberfläche ausgerichtet sind.

Bei den länglich ausgebildeten Borstenbüscheln erstreckt sich die zuvor genannte Abschrägung am freien Ende des Borstenbüschels vorteilhafterweise parallel und/oder tangential zu der Längsachse der länglichen Stirnfläche des Borstenbüschels.

In vorteilhafter Weiterbildung der Erfindung sind außenumfangsseitig längere äußere Borstenbüschel auf gegenüberliegenden Umfangsseiten in einander gegenüberliegenden Umfangssektoren vorgesehen, so dass sich die zentrale Vertiefung in der Arbeitsfläche des Borstenfelds zwischen den gegenüberliegenden längeren Umfangsbüscheln erstreckt. Die längeren, äußeren Borstenbüschel sind hierbei vorteilhafterweise nicht entlang des gesamten Umfangs des Borstenfelds vorgesehen, sondern nur in begrenzten Winkelsektoren von vorzugsweise jeweils weniger als 60° Sektorwinkel, während sich in dazwischen liegenden Sektoren, in denen die rinnenförmig gewölbte Vertiefung im Zentralbereich ihre tiefsten Stellen besitzt, umfangsseitig keine längeren, erhöhten äußeren Büschel plaziert sind. Die rinnenförmige zentrale Vertiefung erstreckt sich sozusagen quer durch das gesamte Borstenfeld hindurch. Die äußeren, umfangsseitigen Borstenbüschel sind in den genannten Sektoren, in denen die rinnenförmige Vertiefung ihre tiefsten Stellen besitzt, an den Verlauf der rinnenförmigen Vertiefungskontur angepaßt bzw. bilden sie einen Teil hiervon.

Der Bürstenkopf ist grundsätzlich in verschiedener Art und Weise antreibbar. Je nach Ausbildung der Zahnbürste und deren Antrieb können verschiedene Antriebskinematiken realisiert sein. In vorteilhafter Weiterbildung der Erfindung umfasst die Antriebsbewegung hierbei eine rotatorische Oszillation um eine Rotationsachse, die sich durch den Borstenträger hindurch erstreckt. In einer vorteilhaften Ausführung der Erfindung kann sich die genannte Rotationsachse senkrecht zur Ebene des Borstenträgers durch dessen Mittelpunkt bzw. Schwerpunkt hindurch erstrecken.

Nach einer alternativen vorteilhaften Ausführung der Erfindung kann die Rotationsachse jedoch auch exzentrisch positioniert sein, so dass an verschiedenen Umfangsseiten des Borstenfelds verschieden große Bewegungskomponenten erzeugt werden. In vorteilhafter Weiterbildung der Erfindung ist dabei die Exzentrizität bezüglich der längeren, äußeren Borstenbüschel gegeben, das heißt die Rotationsachse ist parallel zu einer Verbindungslinie durch die gegenüberliegenden, äußeren, längeren Borstenbüschel verschoben. Je nach Konfiguration des Borstenfelds kann die Exzentrizität unterschiedlich stark ausgebildet sein, wobei es sich als guter Kompromiß zwischen erwünschtermaßen unterschiedlich großen Putzbewegungen an verschiedenen Umfangsseiten einerseits und immer noch erträglichen Rüttelbewegungen andererseits zeigt, wenn die Rotationsachse eine Durchmesserlinie des Borstenträgers im Längenverhältnis von 55% zu 45% bis 70% zu 30% unterteilt.

Alternativ oder zusätzlich kann die Drehachse des Borstenträgers zu der hiervon definierten Ebene spitzwinklig geneigt sein, wobei die Neigung vorzugsweise unter einem Winkel von 89° bis 65°, insbesondere 88° bis 82° zur Ebene des Borstenträgers beträgt. Hierdurch kann in Verbindung mit dem rinnenförmig gewölbten Oberflächenbild des Borstenfelds der Rotationsbewegung einer Stocherbewegung überlagert werden. Vorzugsweise ist die Drehachse dabei derart verkippt, dass das Borstenfeld vom Handstück der Zahnbürste weggekippt ist. Dies ermöglicht eine bessere Zugänglichkeit von schwierig zu reinigenden Zahnbereichen, insbesondere bezüglich der Molaren und der inneren Flächen der Schneidezähne.

Bei rotatorisch oszillierendem Antreiben des Borstenfelds ist in vorteilhafter Weiterbildung der Erfindung vorgesehen, dass sich die in der Draufsicht längliche Stirnfläche der umfangsseitig äußeren, längeren Borstenbüschel in einem Bogen um die Rotationsachse herum, insbesondere auf einem Kreisbogen um die Rotationsachse herum erstreckt.

Die zuvor genannten Abschrägungen an den äußeren Enden der längeren äußeren Borstenbüschel können in Weiterbildung der Erfindung dennoch einen geraden Verlauf besitzen, vorzugsweise im Wesentlichen tangential zu der bogenförmig gekrümmten, länglichen Stirnfläche der Büschel. Hierdurch vereinfacht sich einerseits die Herstellung der Borstenbüschel. Andererseits ergibt sich eine in Umfangsrichtung variierende Breite der Abschrägungen sowie damit zusammenhängend der nicht abgeschrägten Stirnflächen, was nach Art von Keilflächen ein ständiges Eindringen und Herausziehen der entsprechenden Borstenbüschel aus den Zahnzwischenräumen bewirken kann.

Nach einer alternativen vorteilhaften Ausführung der Erfindung können die Abschrägungen jedoch ebenfalls einen bogenförmig um die Rotationsachse herum gekrümmten Verlauf besitzen, insbesondere derart, dass die Abschrägungen und/oder die verbleibenden, nicht abgeschrägten Stirnflächen der Borstenbüschel eine in Umfangsrichtung gleich bleibende Konturierung und Breite besitzen. Hierdurch kann ein besonders sanftes Kontaktieren der Borstenbüschel mit den Zahnflanken und günstiges bzw. gleich bleibendes Eindringen in die Zahnzwischenräume erzielt werden.

Die äußeren, längeren Borstenbüschel umgeben die inneren Borstenbüschel entlang etwa 25% bis 75% des Umfangs des Borstenfelds bzw. des Borstenträgers.

Die inneren Borstenbüschel, die die genannte zentrale Vertiefung in der Arbeitsfläche mit ihren freien Enden definieren, können mit ihren freien Enden eine im Wesentlichen durchgehende, kontinuierliche Oberfläche bilden, so dass sich eine tatsächlich durchgehende rinnenförmige Vertiefung ergibt. Hierdurch kann einerseits eine vollflächige Umschmiegung der Zahnflanken und damit eine flächige Putzwirkung erzielt werden. Andererseits wirkt sich dies günstig auf die Positionierung der Zahnpasta bzw. des Zahnreinigungsmittels aus, das besser auf der Arbeitsfläche des Borstenfelds gehalten wird und nicht so leicht zwischen den Borstenbüscheln hindurch auf den Borstenträger strömt.

In alternativer, vorteilhafter Weiterbildung der Erfindung können die genannten inneren Borstenbüschel mit ihren freien Enden separate Stirnflächen bilden, wodurch eine bessere Abfuhr von gelösten Verunreinigungen erzielt werden kann.

Diese und weitere Merkmale der Erfindung, die jeweils auch für sich oder in Unterkombination unabhängig von ihrer Zusammenfassung in den Ansprüchen den Gegenstand der vorliegenden Erfindung bilden können, gehen außer aus den Ansprüchen auch aus der nachfolgenden Beschreibung und den zugehörigen Zeichnungen hervor, anhand derer bevorzugte Ausführungsformen der Erfindung näher erläutert werden. In den Zeichnungen zeigen:
- Figur 1:: eine schematische Seitenansicht einer elektrischen Zahnbürste mit einem rotato- risch antreibbaren Büstenkopf nach einer bevorzugten Ausführung der Erfin- dung,
- Figur 2:: eine Draufsicht auf den Bürstenkopf der Zahnbürste aus Figur 1,
- Figur 3:: einen Längsschnitt durch den Bürstenkopf aus Figur 2 entlang der Linie B-B pa- rallel zur Längsachse der Zahnbürste,
- Figur 4:: einen Längsschnitt durch den Bürstenkopf aus Figur 2 entlang der Linie A-A in Figur 2,
- Figur 5:: eine vergrößerte Seitenansicht eines der äußeren, längeren Borstenbüschel aus Figur 3 in einer vergrößerten, schematischen Darstellung, die die Winkelverhält- nisse der Abschrägung des Büschels zeigt,
- Figur 6:: eine schematische Draufsicht auf den Bürstenkopf der Zahnbürste aus Figur 1 nach einer weiteren vorteilhaften Ausführung der Erfindung,
- Figur 7:: einen Längsschnitt durch den Zahnbürstenkopf aus Figur 6 entlang der dort ein- getragenen Linie B-B parallel zur Längsachse der Zahnbürste,
- Figur 8:: einen Längsschnitt durch den Borstenkopf aus Figur 6 entlang der dort eingetra- genen Linie A-A,
- Figur 9:: eine schematische Draufsicht auf den Bürstenkopf der Zahnbürste aus Figur 1 nach einer weiteren vorteilhaften Ausführung der Erfindung,
- Figur 10:: einen Längsschnitt durch den Zahnbürstenkopf aus Figur 9 entlang der dort ein- getragenen Linie B-B parallel zur Längsachse der Zahnbürste,
- Figur 11:: einen Längsschnitt durch den Borstenkopf aus Figur 9 entlang der dort eingetra- genen Linie A-A,
- Figur 12:: eine schematische Draufsicht auf den Bürstenkopf der Zahnbürste aus Figur 1 nach einer weiteren vorteilhaften Ausführung der Erfindung,
- Figur 13:: einen Längsschnitt durch den Zahnbürstenkopf aus Figur 12 entlang der dort eingetragenen Linie B-B parallel zur Längsachse der Zahnbürste,
- Figur 14:: einen Längsschnitt durch den Borstenkopf aus Figur 12 entlang der dort einge- tragenen Linie A-A,
- Figur 15:: eine schematische Draufsicht auf den Bürstenkopf der Zahnbürste aus Figur 1 nach einer weiteren vorteilhaften Ausführung der Erfindung,
- Figur 16:: einen Längsschnitt durch den Zahnbürstenkopf aus Figur 15 entlang der dort eingetragenen Linie B-B parallel zur Längsachse der Zahnbürste,
- Figur 17:: einen Längsschnitt durch den Borstenkopf aus Figur 15 entlang der dort einge- tragenen Linie A-A,
- Figur 18:: eine schematische Draufsicht auf den Bürstenkopf der Zahnbürste aus Figur 1 nach einer weiteren vorteilhaften Ausführung der Erfindung,
- Figur 19:: einen Längsschnitt durch den Zahnbürstenkopf aus Figur 18 entlang der dort eingetragenen Linie B-B parallel zur Längsachse der Zahnbürste,
- Figur 20:: einen Längsschnitt durch den Borstenkopf aus Figur 18 entlang der dort einge- tragenen Linie A-A,
- Figur 21:: eine schematische Draufsicht auf den Bürstenkopf der Zahnbürste aus Figur 1 nach einer weiteren vorteilhaften Ausführung der Erfindung,
- Figur 22:: einen Längsschnitt durch den Zahnbürstenkopf aus Figur 21 entlang der dort eingetragenen Linie B-B parallel zur Längsachse der Zahnbürste,
- Figur 23:: einen Längsschnitt durch den Borstenkopf aus Figur 21 entlang der dort einge- tragenen Linie A-A,
- Figur 24:: eine schematische Draufsicht auf den Bürstenkopf der Zahnbürste aus Figur 1 nach einer weiteren vorteilhaften Ausführung der Erfindung,
- Figur 25:: einen Längsschnitt durch den Zahnbürstenkopf aus Figur 24 entlang der dort eingetragenen Linie B-B parallel zur Längsachse der Zahnbürste,
- Figur 26:: einen Längsschnitt durch den Borstenkopf aus Figur 24 entlang der dort einge- tragenen Linie A-A,
- Figur 27:: einen schematischen Längsschnitt durch den Bürstenkopf der Zahnbürste aus Figur 1 nach einer weiteren vorteilhaften Ausführung der Erfindung, wobei die umfangsseitigen, äußeren, längeren Borstenbüschel an ihren äußeren Enden in- nenseitige Abschrägungen besitzen, und
- Figur 28:: eine schematische Funktionsdarstellung des Bürstenkopfs aus Figur 27, die das Anschmiegen der gewölbten Arbeitsfläche des Borstenfelds an eine Zahnflanke zeigt.

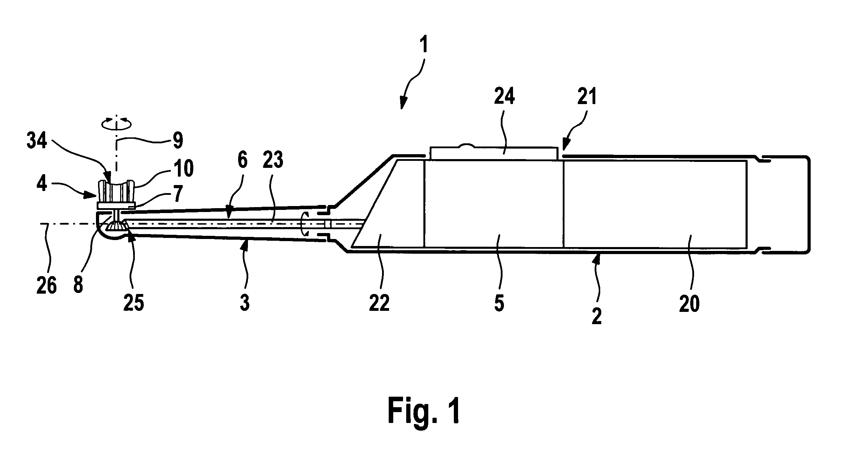

Die in Figur 1 gezeichnete Zahnbürste 1 umfasst einen Handteil 2 sowie einen daran ankuppelbaren Bürstenkopf 4. Genauer gesagt ist der Bürstenkopf 4 an einen mit dem Handteil 2 verbundenen Hals 3 der Zahnbürste 1 ankuppelbar, der in Form eines hohlen Bürstenrohrs ausgebildet ist. Es wäre jedoch ebenfalls möglich, dass der Bürstenkopf 4 den genannten Hals 3 bzw. zumindest einen Teil hiervon umfasst und mit diesem an den Handteil 2 ankuppelbar ist.

Der Handteil 2 nimmt in seinem Inneren einen Energiespeicher 20, vorzugsweise in Form eines Akkus, einen Motor 5, vorzugsweise in Form eines Elektromotors, sowie eine Steuereinrichtung 21 auf.

Die Drehbewegung des Motors 5 wird über ein Getriebe 22 in der gezeichneten Ausführung in eine rotatorisch oszillierende Bewegung einer Antriebswelle 23 umgesetzt, die sich durch den Hals 3 hindurch zum Bürstenkopf 4 hin erstreckt. Über einen am Handteil 2 angebrachten Schalter 24 kann die Zahnbürste 1 aktiviert bzw. abgeschalten werden.

Der Bürstenkopf 4 wird in bekannter Art und Weise mittels eines geeigneten Getriebes (bevorzugt abweichend zu der gezeichneten Ausführungsform über eine Kegelradstufe 25) mittels eines Schubstangengetriebes am Ende der Antriebswelle 23 in eine oszillierende Rotationsbewegung um eine Rotationsachse 9 versetzt, die sich im Wesentlichen quer zur Zahnbürstenlängsachse 26 erstreckt. Der dabei vom Borstenträger 7 des Bürstenkopfs 4 überstrichene Winkelbereich nimmt vorteilhafterweise einen Wert im Bereich von etwa ± 35° ± 5° an, wobei jedoch auch eine Oszillation im Bereich von ± 10° bis ± 100° möglich ist. Die Oszillationsfrequenz kann variieren und beispielhaft zwischen 10 Hz und 100 Hz liegen. In der Figur 1 gezeichneten Ausführung bildet die Rotationsachse 9 mit der Zahnbürstenlängsachse 26 einen rechten Winkel. Zusätzlich ist ein Antrieb des Bürstenkopfes 4 in einer dritten Dimension für dessen Pulsation in Richtung der Rotations- bzw. Oszillationsachse vorgesehen.

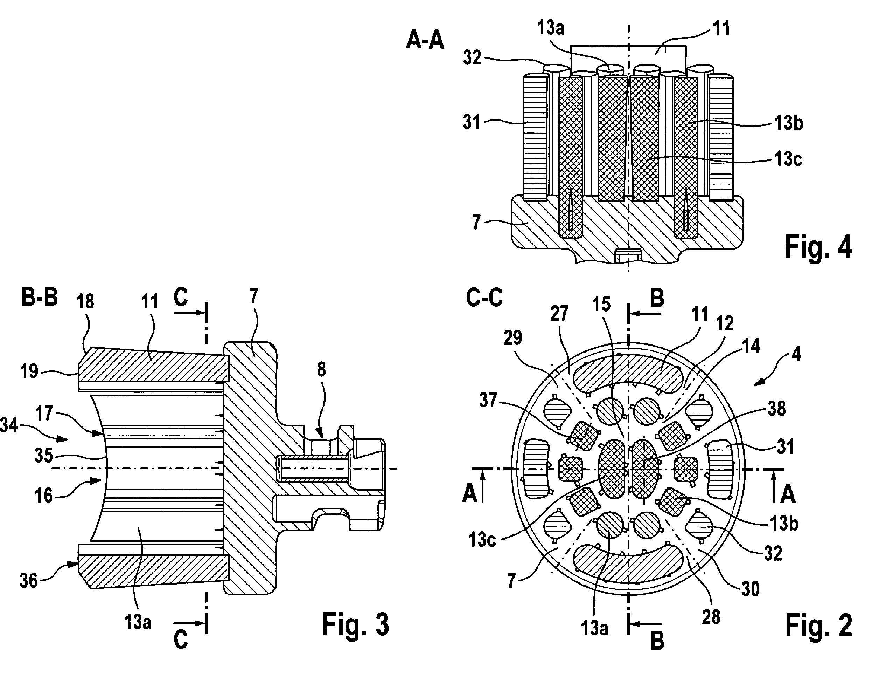

Eine bevorzugte Ausführungsform des Bürstenkopfs 4 der Zahnbürste 1 ist in den Figuren 2 bis 5 dargestellt. Der Borstenträger 7 ist hierbei rund, jedoch vorteilhafterweise nicht kreisrund, sondern leicht oval und/oder elliptisch ausgebildet, wobei die längere Achse des Ovals bzw. der Ellipse in der Neutralstellung des Borstenträgers 7 parallel zur Zahnbürstenlängsachse 26 und die kürzere Achse des Ovals bzw. der Ellipse quer hierzu verläuft. In Figur 2 ist die längere Achse des Ovals bzw. der Ellipse parallel zu der Linie B-B.

Auf dem Borstenträger 7 ist hierbei eine Vielzahl von Borstenbüscheln angeordnet, die in mehreren Ringen 12, 14 und 15 angeordnet und über das Borstenfeld 10 verteilt sind. Auf einem äußeren Ring 12 sind dabei in der gezeichneten Ausführung nach Figur 2 acht Borstenbüschel positioniert, von denen vier eine langgestreckte Kontur besitzen, während vier eine - grob gesprochen - runde bzw. gleichseitige Querschnittskontur besitzen. Die Länge der Borstenbüschel auf dem genannten äußeren Ring 12 variiert hierbei, wie noch näher erläutert wird, wobei - grob gesprochen - generell in gegenüberliegenden Sektoren 27 und 28, die in der Ausgangsstellung des Borstenträgers 7 die Zahnbürstenlängsachse 26 enthalten, längere Borstenbüschel vorgesehen sind als in hierzu quer orientierten bzw. dazwischen liegenden Sektoren 29 und 30, vgl. Figur 2.

Wie Figur 2 zeigt, sind die auf den Hauptachsen B-B bzw. A-A liegenden Borstenbüschel 11 bzw. 31 des äußeren Rings 12 in der Draufsicht jeweils länglich ausgebildet, während die dazwischen liegenden Borstenbüschel 32 eine näherungsweise gleichseitige Konturierung bzw. eine näherungsweise kubischen bzw. runden Querschnitt besitzen. Die genannten länglichen Borstenbüschel 11 bzw. 31 besitzen dabei jeweils einen bogenförmig gekrümmten Verlauf um die Oszillations-/Rotationsachse 9 herum, vgl. Figur 2.

Die auf der längeren Hauptachse B-B sitzenden äußeren Borstenbüschel 11 erstrecken sich dabei über einen Umfangsabschnitt von etwa 50° bis 90°, vorzugsweise etwa 70°, während sich die auf der kürzeren Hauptachse A-A sitzenden äußeren Borstenbüschel 31 über einen Umfangsabschnitt von jeweils etwa 20° bis 45°, vorzugsweise etwa 30° erstrecken.

Auf einem von außen her betrachtet zweiten Ring 15 von Borstenbüscheln sind insgesamt 10 Borstenbüschel 13a und 13b positioniert, von denen einige einen kreisrunden Querschnitt und andere einen eckigen Querschnitt besitzen. Insbesondere sind, wie Figur 2 zeigt, in den Sektoren 27 und 28, in denen die längeren äußeren Büschel 11 des äußeren Rings 12 liegen, im Querschnitt kreisrunde Borstenbüschel 13a angeordnet, während in den dazwischen liegenden Sektoren 29 und 30 des Borstenträgers 7 auf dem zweiten Ring 14 eckige Borstenbüschel vorgesehen sind. Auch die Länge dieser Borstenbüschel 13a und 13b auf dem zweiten Ring 14 variiert von Büschel zu Büschel entlang dem Umfang des Rings 14 zyklisch, und zwar derart, dass in den genannten Sektoren 27 und 28 längere Borstenbüschel vorgesehen sind als in den auf der kurzen Hauptachse liegenden Sektoren 29 und 30.

Die runden Borstenbüschel 13a sowie die eckigen, etwa quadratischen Borstenbüschel 13b des mittleren Rings 14 besitzen ungeachtet ihrer unterschiedlichen Querschnittskontur näherungsweise zumindest etwa dieselbe Querschnittsfläche.

Wie Figur 2 zeigt, kann, um günstige Platzverhältnisse für die Befestigung der Borstenbüschel zu schaffen, kann in Weiterbildung der Erfindung vorgesehen sein, dass die eckigen Borstenbüschel 13b des mittleren Rings 14, zumindest einige hiervon, gegenüber den Hauptachsen A-A und B-B des Borstenträgers 7 und auch gegenüber der Ringkontur des Rings 14, auf dem sie angeordnet sind, spitzwinklig verdreht sind. Insbesondere kann zumindest eines der eckigen Borstenbürschel, vorzugsweise jedes zweite eckige Borstenbüschel 13b mit seiner Hauptachse 37 derart verdreht sein, dass die Hauptachse 37 des Borstenbüschelquerschnitts spitzwinklig zu einer Tangentialen an den mittleren Ring 14 geneigt ist. Hierdurch werden entsprechende Ankerplättchen entsprechend aus dem Kollisionsbereich anderer Ankerplättchen herausgedreht. Zudem kann das Biegeverhalten des Borstenfelds insgesamt homogener und insbesondere weniger richtungsabhängig ausgebildet werden.

Schließlich sind in einem ganz inneren Bereich bzw. einem von außen her betrachtet dritten Ring von Büscheln zwei längliche Borstenbüschel 13c vorgesehen, die sich mit ihrer Längserstreckung 38 jeweils parallel zur längeren Hauptachse B-B erstrecken.

Die innersten Borstenbüschel 13c sind dabei hinsichtlich ihrer Querschnittfläche deutlich größer als die Borstenbüschel 13 a und 13b des mittleren Rings. In der gezeichneten Ausführung beträgt ihre Querschnittfläche zwischen 200% und 400% der Querschnittsfläche der Borstenbüschel 13 a und 13b des mittleren Rings 14.

Die innersten Borstenbüschel 13c sind dabei länglich ausgebildet, so daß Ihre Längserstreckung 38 mehr als 150% ihrer Quererstreckung, vorzugsweise etwa 150% bis 300% beträgt. In der gezeichneten Ausführung sind die innersten Borstenbüschel 13c vorteilhafterweise an einer Außenkontur bauchig gewölbt und an einer Innenkontur gerade ausgebildet, wobei die Innen- und Außenkonturen vorteilhafterweise durch gerundete Stirnkonturen verbunden sind.

Die innersten Borstenbüschel 13c sind dabei vorteilhafterweise mit ihren Längsachsen 38 parallel zur Hauptachse des Borstenträgers ausgerichtet, die sich in der unausgelenkten Neutralstellung des Borstenträgers 7 parallel zur Zahnbürstenlängsachse 26 bzw. einer hierdurch gehenden Längsmittelebene erstreckt. Die Borstenbüschel bilden mit ihren Borstenenden eine im Wesentlichen homogene, dichte Borstenendenfläche. Dies wird durch zur Rotationsachse hin nach innen geneigten Bestopfungslochwandungen 13d mit einem Neigungswinkel von ca. 1° bis 2° erreicht, weil dadurch die zentralen Borstenbüschel zueinander geneigt verlaufen.

Wie Figur 3 zeigt, sind die Borstenbüschel des Borstenfelds 10 an ihren freien Enden derart konturiert bzw. hinsichtlich ihrer Länge und/oder Höhe derart aufeinander abgestimmt, dass die von den freien Enden der Borstenbüschel definierte Arbeitsfläche 34 des Borstenfelds 10 eine zentrale Vertiefung 16 besitzt, die einen rinnenförmigen Boden 17 besitzt, der in einer Richtung einen gewölbten Verlauf und in einer dazu senkrechten Richtung einen geraden Verlauf besitzt. Die Wölbung erstreckt sich dabei vorteilhafterweise in Richtung der längeren Hauptachse B-B bzw. in Richtung der Zahnbürstenlängsachse 26, wenn der Borstenträger 7 in seiner unausgelenkten Neutralstellung ist. In einer hierzu senkrechten Richtung, die parallel zur kürzeren Hauptachse A-A des Borstenträgers 7 und/oder quer zur Zahnbürstenlängsachse 26 verläuft, wenn der Borstenträger 7 in seiner unausgelenkten Neutralstellung ist, besitzt die Vertiefung 16 eine gerade Konturierung, wie dies Figur 3 zeigt.

Die zentrale Vertiefung 16 kann dabei unterschiedliche tief ausgebildet sein. In vorteilhafter Weiterbildung der Erfindung ist der tiefste Punkt der Vertiefung 16 um einen Betrag von etwa 1 mm bis 3 mm, vorzugsweise etwa 2 mm gegenüber dem höchsten Punkt des Borstenfelds 10 tiefer gesetzt. Die rinnenförmige Konturierung des Bodens 17 der Vertiefung 16 kann hierbei grundsätzlich unterschiedlich gewölbt sein. Bei der in den Figuren 3 bis 5 gezeigten Ausführung ist eine kreisbogenförmige Konturierung mit einem Krümmungsradius im Bereich von 8 mm bis 17 mm, vorzugsweise etwa 10 mm bis 14 mm vorgesehen, wobei dies jedoch je nach Dimensionierung und Konfigurierung des Borstenfelds variieren kann.

Wie Figur 3 zeigt, sind hierbei die Stirnflächen der inneren Büschel 13a, 13b und 13c sowie die Stirnflächen der kürzeren, äußeren Büschel 31, die ebenfalls den rinnenförmigen Boden 17 mit definieren, nicht als ebene Flächen ausgebildet, sondern ebenfalls in sich rinnenförmig gewölbt. Die jeweils rinnenförmig gewölbten Stirnflächen 35 ergänzen hierbei einander und bilden zusammen die genannte rinnenförmige Kontur des Bodens 17 der zentralen Vertiefung 16. Konkret nimmt die Neigung der Stirnflächen der inneren Borstenbüschel 13a bis 13c mit zunehmenden Abstand von der Rotationsachse 9 in Richtung parallel zur Hauptachse B-B zu, vgl. Figur 3. Mit anderen Worten: die auf der hierzu quer verlaufenden Hauptachse A-A angeordneten Borstenbüschel sind an ihren freien Enden zwar leicht gewölbt, jedoch im Wesentlichen parallel zur Borstenträgeroberfläche ausgerichtet, während mit zunehmenden Abstand von der genannten Hauptachse A-A die Neigung der freien Enden zunimmt.

Wie Figur 3 ebenfalls zeigt, sind die in den Sektoren 27 und 28 angeordneten äußeren Büschel 11 des äußeren Rings 12 gegenüber den restlichen Borstenbüscheln verlängert bzw. besitzen sie eine größere Höhe, so dass sie über die restlichen Borstenbüschel vorspringen. Hierbei ergibt sich auch eine Höhenstufe gegenüber der zentralen Vertiefung 16, vgl. Figur 3, das heißt die zentrale Vertiefung 16 geht bei der in Figur 3 gezeichneten Ausführung nicht kontinuierlich in die Stirnflächen der genannten äußeren Büschel 11 über.

Die genannten äußeren Büschel 11 in den gegenüberliegenden Sektoren 27 und 28, die in der Neutralstellung des Borstenträgers die Zahnbürstenlängsachse 26 enthalten, besitzen vorteilhafterweise Stirnflächen 36, die einen Flachabschnitt 19 umfassen, der im Wesentlichen senkrecht zur Längsachse der Borstenbüschel 11 ausgerichtet ist sowie Abschrägungen 18, die die genannten Stirnflächen 36 zur Außenseite hin abschrägen.

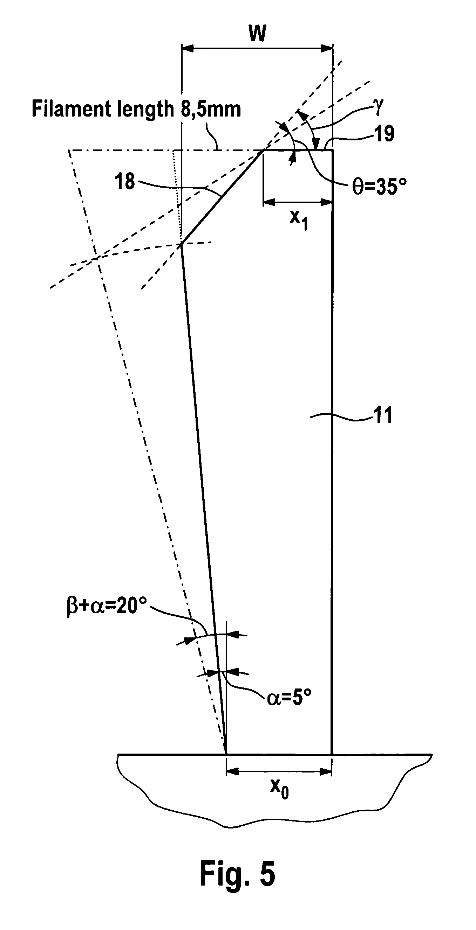

Wie Figur 5 zeigt, erstrecken sich hierbei die genannten Abschrägungen 18 unter einem Winkel Y im Bereich von 20° bis 60°, vorzugsweise etwa 30° bis 40°. Die Abschrägungen 18 sind hierbei vorteilhafterweise so tief bzw. breit ausgebildet, dass sie sich etwa über 25 % bis 75 % der Breite W des jeweiligen Borstenbüschels 11 erstrecken. Die Breite W meint hierbei die Erstreckung des Borstenbüschels senkrecht zu dessen Längsachse sowie senkrecht zur Längserstreckung der Abschrägung 18, und zwar im Bereich des freien Endes des Borstenbüschels, vgl. Figur 5. In der in Figur 5 gezeichneten Ausführung erstreckt sich also die Abschrägung über etwa 1/4 bis 3/4 der Breite W (gemessen über die Längsachse B-B).

Die genannten längeren äußeren Borstenbüschel 11 sind hierbei in ihrem Längsschnitt betrachtet insgesamt trapezförmig ausgebildet. Während sich die innenliegende Flanke des jeweiligen Borstenbüschels 11 im Wesentlichen senkrecht zu der vom Borstenträger 7 definierten Ebene erstreckt, ist die außen liegende Flanke zu einer Senkrechten auf den Borstenträger 7 unter einem Winkel α von etwa 1,5° bis 10°, vorzugsweise etwa 3° bis 5° geneigt, so dass sich der Querschnitt des Borstenbüschels 11 zu seinem freien Ende hin vergrößert, das heißt der Borstenbüschel wird zum freien Ende hin breiter. Hierdurch kann bei begrenzter Größe des Borstenträgers 7 eine große Arbeitsfläche erzielt werden. Überdies ergeben sich günstige Geometrieverhältnisse am freien Ende des Borstenbüschels 11 in Bezug auf dessen Abschrägung 18.

Um die Zahnflanken möglichst flächig zu umschmiegen, den Putzdruck großflächig zu verteilen und Zahnpasta oder dergleichen auf der Arbeitsfläche 34 zu halten, nehmen die Borstenbüschel mit ihren freien Enden vorteilhafterweise zumindest 35 % bis 55 % des vom Borstenträger 7 definierten Fläche ein, vorzugsweise 50 % oder mehr hiervon. Wie Figur 2 zeigt, können die Borstenbüschel auf dem äußeren Ring 12 sich über einen Umfangsabschnitt von etwa 200° bis 300° erstrecken, wenn die Erstreckung aller Borstenbüschel zusammengerechnet wird. Der von außen betrachtet zweite Ring 14 von Borstenbüschel kann sich über einen Umfang von insgesamt etwa ebenfalls 200° bis 300° erstrecken, wenn die Erstreckung aller Borstenbüschel entlang des Umfangs zusammengerechnet wird. Die innersten Borstenbüschel können mit ihren freien Enden vorteilhafterweise eine im Wesentlichen vollflächig geschlossene Fläche bedecken.

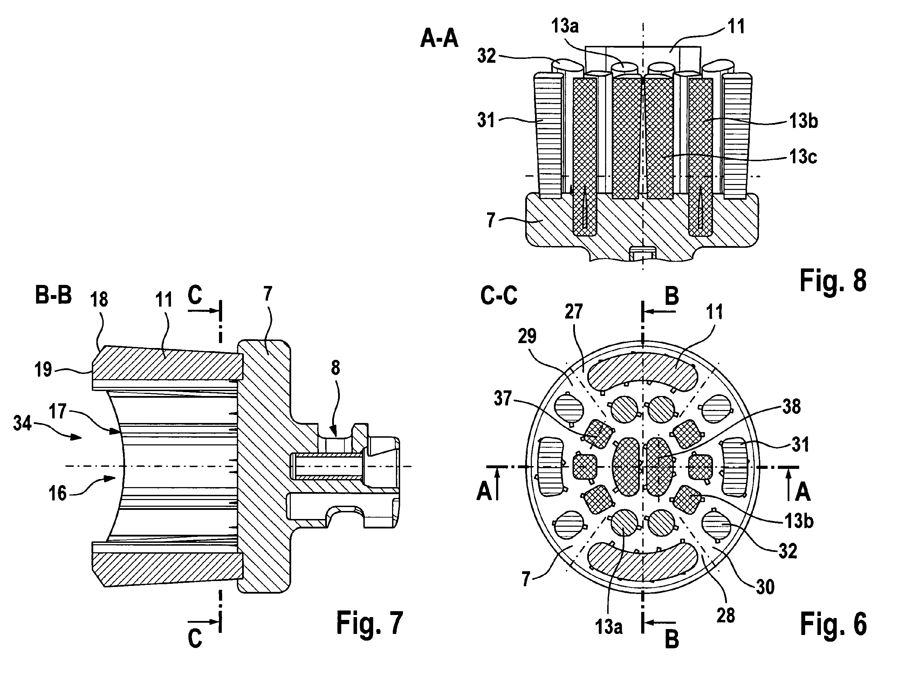

Die in den Figuren 6 bis 8 gezeigte Ausführungsform des Bürstenkopfs 4 entspricht im Wesentlichen der der Figuren 2 bis 5, so dass zur Vermeidung von Wiederholungen auf die entsprechende vorangehende Beschreibung verwiesen wird. Im Wesentlichen unterscheidet sich die Ausführung der Figuren 6 bis 8 von der der Figuren 2 bis 5 nur durch die etwas tiefere Konturierung der zentralen, rinnenförmigen Vertiefung 16, die mit einem kleineren Krümmungsradius gekrümmt ist, sowie durch eine insgesamt runde Konturierung der nicht länglichen Borstenbüschel 32 auf dem äußeren Ring 12 von Borstenbüscheln.

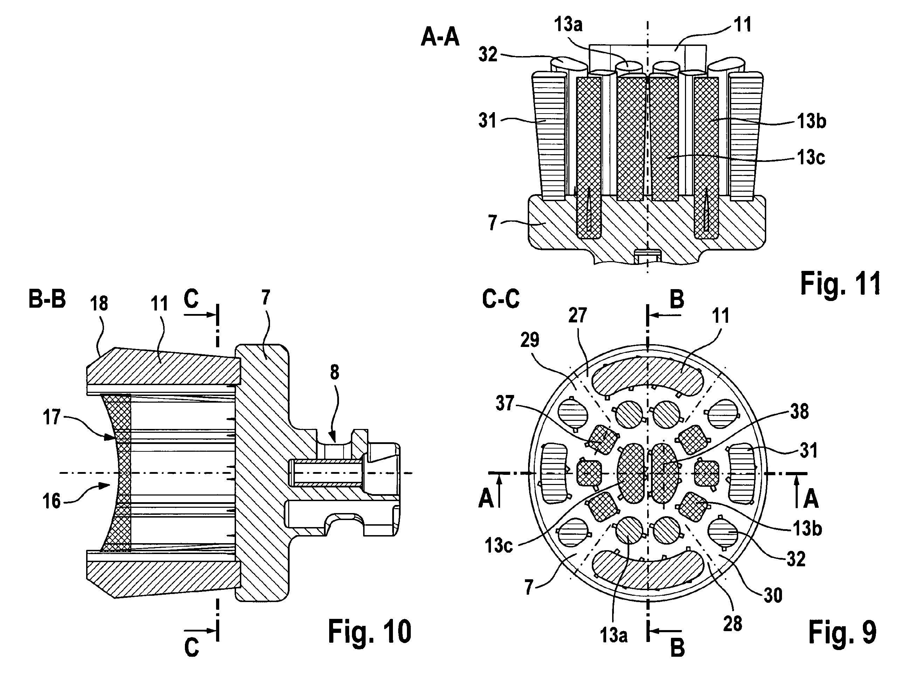

Die weitere Ausführung des Bürstenkopfs 4 nach den Figuren 9 bis 11 entspricht im Wesentlichen der Ausführung nach den Figuren 6 bis 8, so dass auf deren vorangehende Beschreibung verwiesen wird. Im Unterschied zu dieser vorherigen Ausführung besitzen die längeren äußeren Borstenbüschel 11 in den Sektoren 27 und 28 des Borstenträgers 7, die in dessen unausgelenkter Neutralstellung die Zahnbürstenlängsachse 25 enthalten, eine jeweils stärker ausgebildete Abschrägung 18, die gegenüber den Flachabschnitten 19 der Stirnflächen 36 unter einem Winkel Y von 55° abgeschrägt sind, um ein noch besseres Eindringen dieser Borstenbüschel 11 in Zahnzwischenräume zu erlauben.

Zum anderen besitzen einige und/oder alle der inneren Büschel 13, insbesondere die inneren Büschel 13b und 13c, die mit ihren freien Enden den rinnenförmigen Boden der zentralen Vertiefung 16 definieren, speziell ausgebildete freie Enden. Diese Borstenbüschel 13b und 13c bestehen zumindest teilweise aus Filamenten, deren Enden aufgespleißt sind, so dass sich an den freien Enden sozusagen ein weicher Flor und/oder Flausch ergibt, wodurch speziell in diesem Bereich Zahnpasta gut gehalten wird und die jeweilige Zahnfläche nahezu vollflächig umschmiegt wird.

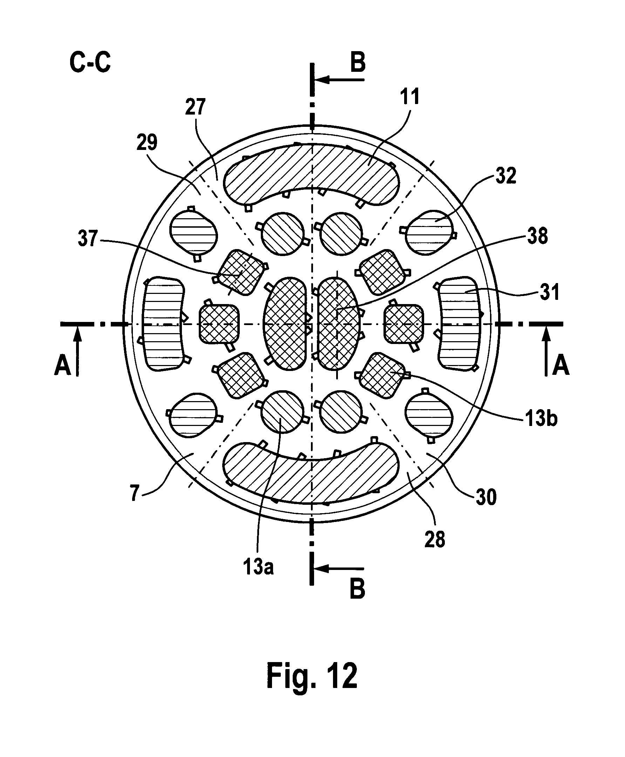

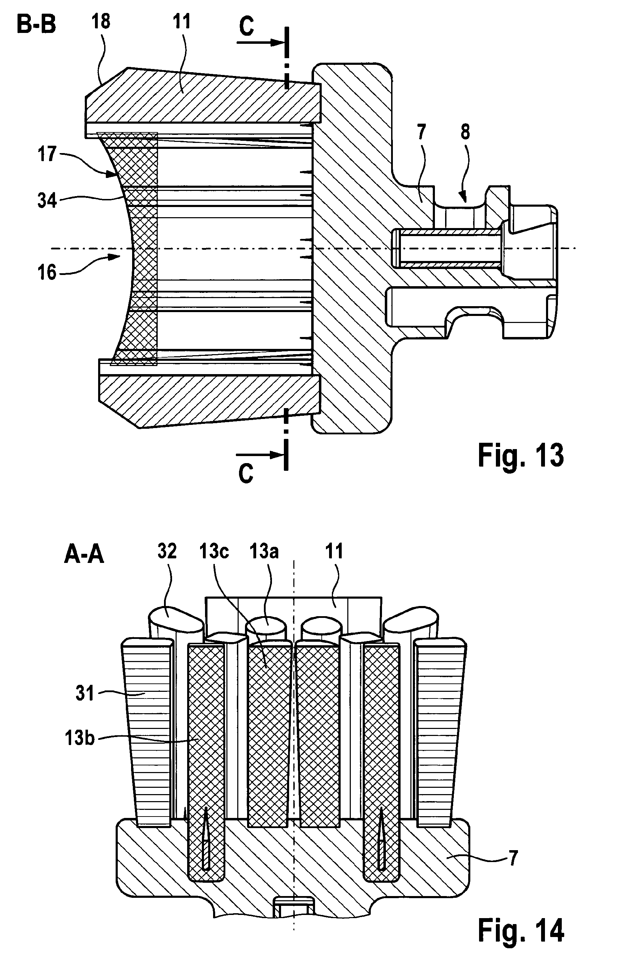

Die in den Figuren 12 bis 14 gezeigte Ausführungsform entspricht im Wesentlichen der in den Figuren 9 bis 11 gezeigten Ausführung, so dass auf deren vorangehende Ausführung verwiesen wird. Im Unterschied zu dieser vorangehenden Ausführungsform ist der maximale Höhenunterschied zwischen dem tiefsten Punkt der Vertiefung 16 und dem höchsten Punkt des Borstenfelds größer ausgebildet und beträgt etwa bei gleicher Wölbung des Bodens 17 der Vertiefung 16 etwa 2 mm. Die Borstenlängen der Borsten im Bereich der Sektoren 27 und 28 sind unterschiedlich ausgebildet. Dies ermöglicht eine bessere Zugänglichkeit der Molaren und der inneren Zahnflächen der Schneidezähne. Weiterhin beträgt die Außenneigung der Borsten zwischen 3° bis 5°.

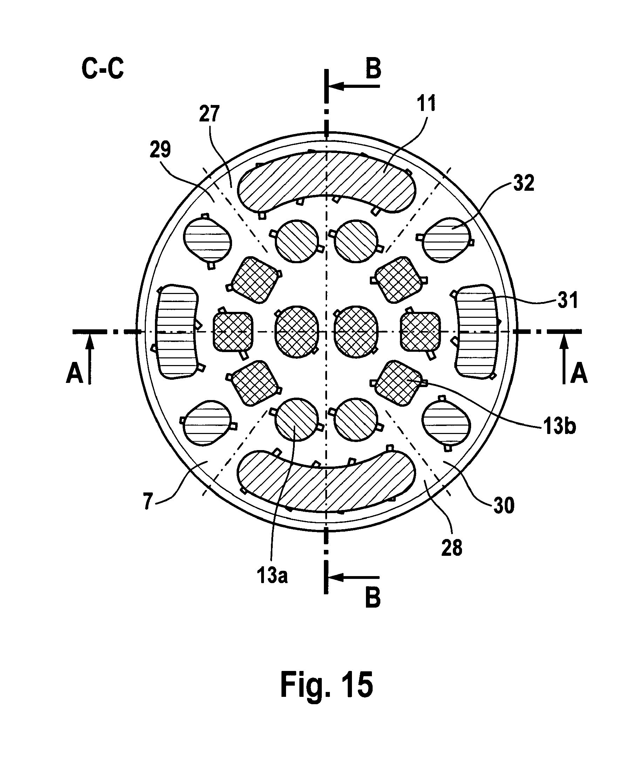

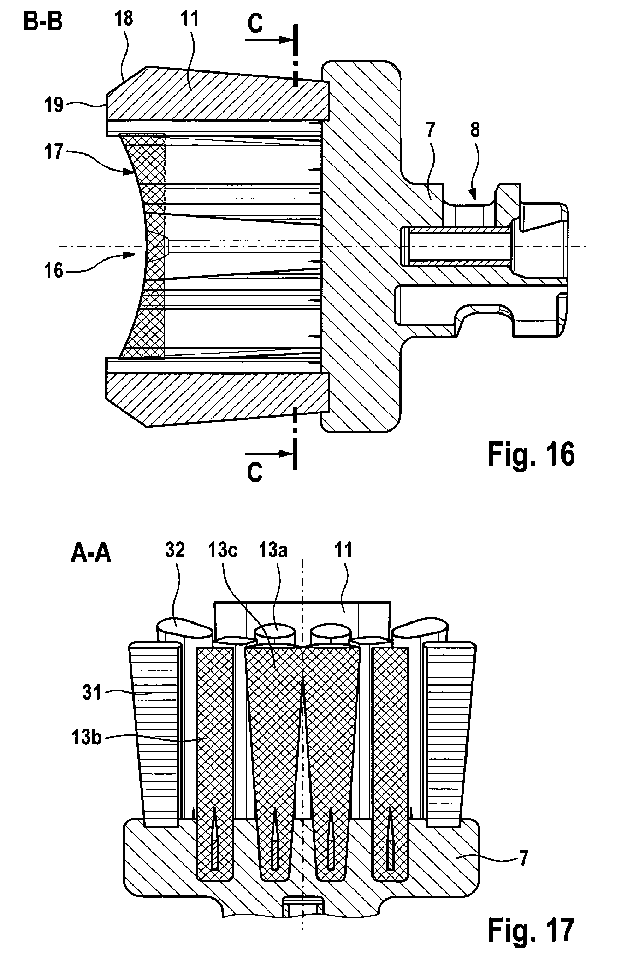

Die weitere Ausführung des Bürstenkopfs 4 nach den Figuren 15 bis 17 entspricht im Wesentlichen der vorangehenden Ausführung nach den Figuren 12 bis 14, so dass auf deren vorangehende Beschreibung verwiesen wird. Im Gegensatz zu dieser vorangehenden Ausführung sind auf dem innersten Ring 15 des Borstenträgers 7 zwei weniger stark länglich ausgebildete Borstenbüschel 13c vorgesehen, die im Wesentlichen einen leicht ovalen Querschnitt besitzen und mit ihren Längsachsen parallel zur Hauptachse B-B ausgerichtet sind. Wie Figur 17 zeigt, sind diese innersten Borstenbüschel 13c jedoch stärker konisch aufgeweitet, so dass sich ihr Querschnitt zu den freien Enden hin vergrößert. Wie Figur 17 zeigt, weiten sich die innersten Borstenbüschel 13 unter einem Öffnungswinkel im Bereich von 0° bis 10°, vorzugsweise etwa 1,5° bis 5° auf, so dass sich im Bereich der freien Enden die beiden Borstenbüschel 13c sozusagen vereinen und eine gemeinsame Oberfläche bilden, während sie an ihrem Fuß am Borstenträger 7 voneinander beabstandet sind.

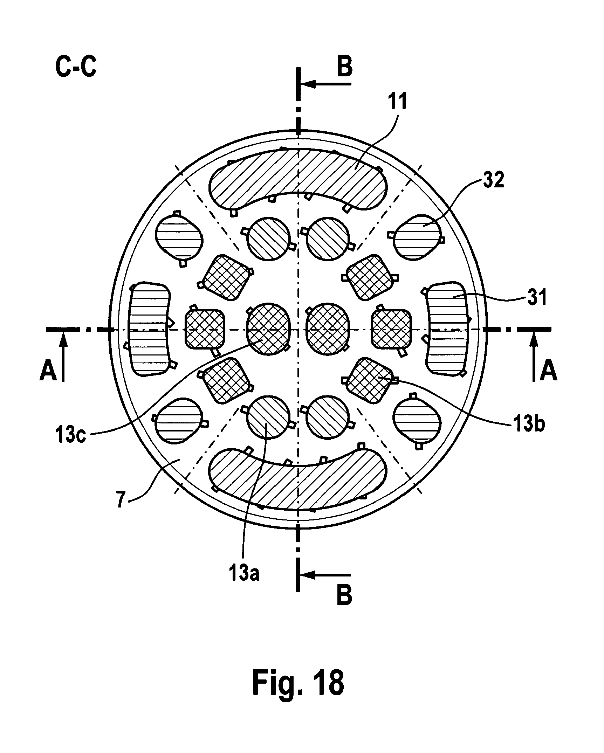

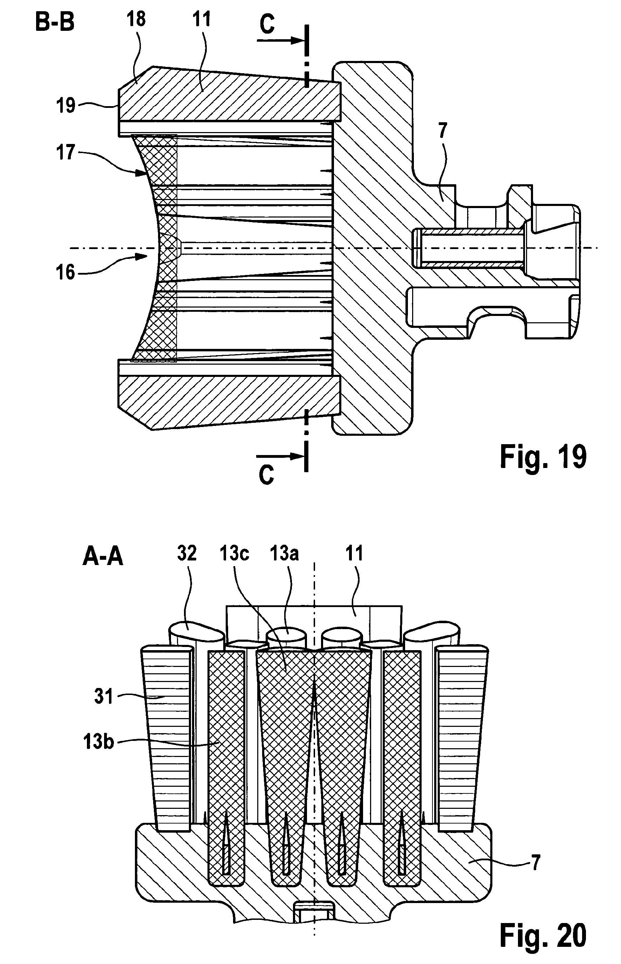

Die Ausführung nach den Figuren 18 bis 20 entspricht im Wesentlichen der vorhergehenden Ausführung nach den Figuren 15 bis 17, so dass auf deren vorangehende Beschreibung verwiesen wird. Im Gegensatz zur vorangehenden Ausführung sind die Abschrägungen 18 der erhöhten, äußeren Borstenbüschel 11 in den Sektoren 27 und 28 jedoch anders ausgebildet. Während die Abschrägungen 18 der vorangehenden Ausführungen einen geraden Verlauf besaßen, das heißt trotz dem bogenförmigen Verlauf der Borstenbüschel 11 in der Draufsicht eine ebene Fläche definierten, besitzen die Abschrägungen 18 bei der Ausführung nach den Figuren 18 bis 20 einen bogenförmig gekrümmten Verlauf, wobei die Abschrägungen 18 entsprechend dem gekrümmten Verlauf der Borstenbüschel 11 ebenfalls um die Rotationsachse 9 herum gekrümmt sind, so dass sich eine im Wesentlichen gleichmäßige Abschrägung der Borstenbüschel 11 ergibt. Genauer gesagt sind die Borstenbüschel 11 im Wesentlichen über ihre gesamte Länge, das heißt Erstreckung in Umfangsrichtung gleich stark abgeschrägt, da die Abschrägung 18 dem Verlauf der Borstenbüschel 11 folgt. Dies ist auch auf die übrigen Ausführungsformen übertragbar.

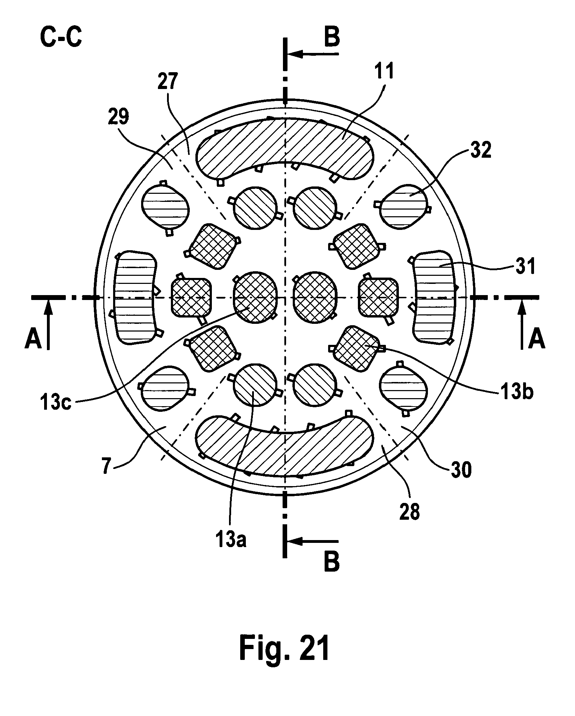

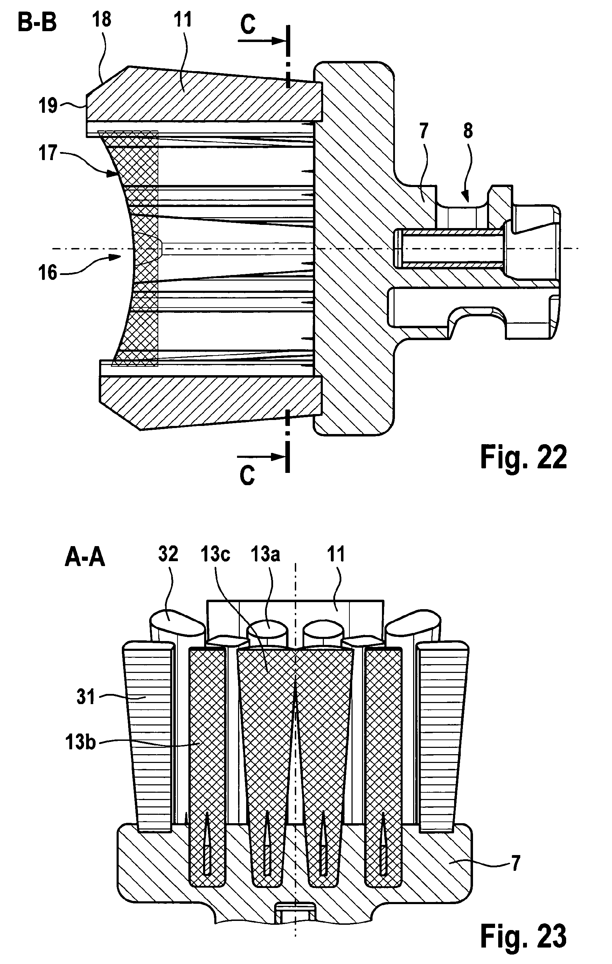

Die Ausführung nach den Figuren 21 bis 23 entspricht im Wesentlichen der Ausführung nach den Figuren 12 bis 14, so dass auf deren vorangehende Ausführung verwiesen wird. Bei der Ausführung nach den Figuren 21 bis 23 ist die Vertiefung 16 gegenüber den längeren äußeren Borstenbüscheln 11 im Vergleich zu den Figuren 15 bis 17 tiefer ausgebildet, so dass sich ein Höhenunterschied zwischen dem tiefsten Punkt der Vertiefung 16 zum höchsten Punkt der Borstenbüschel 11 von etwa 2 mm ergibt.

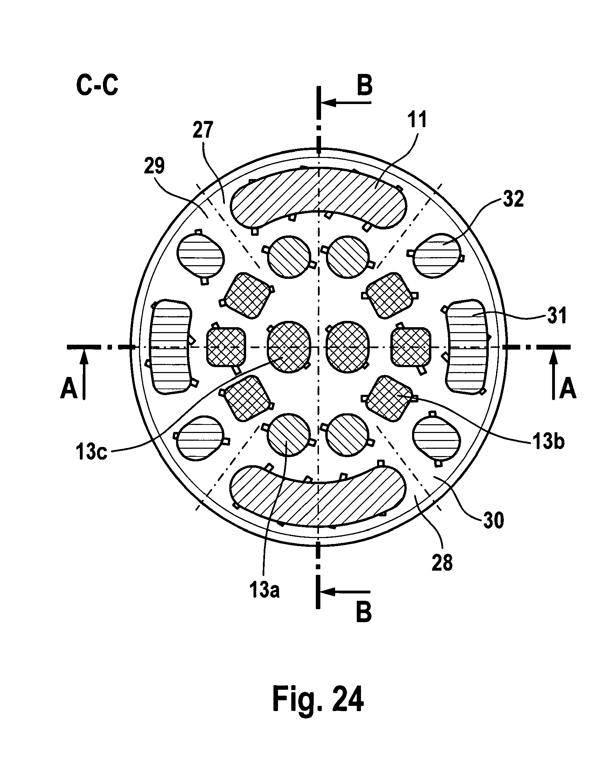

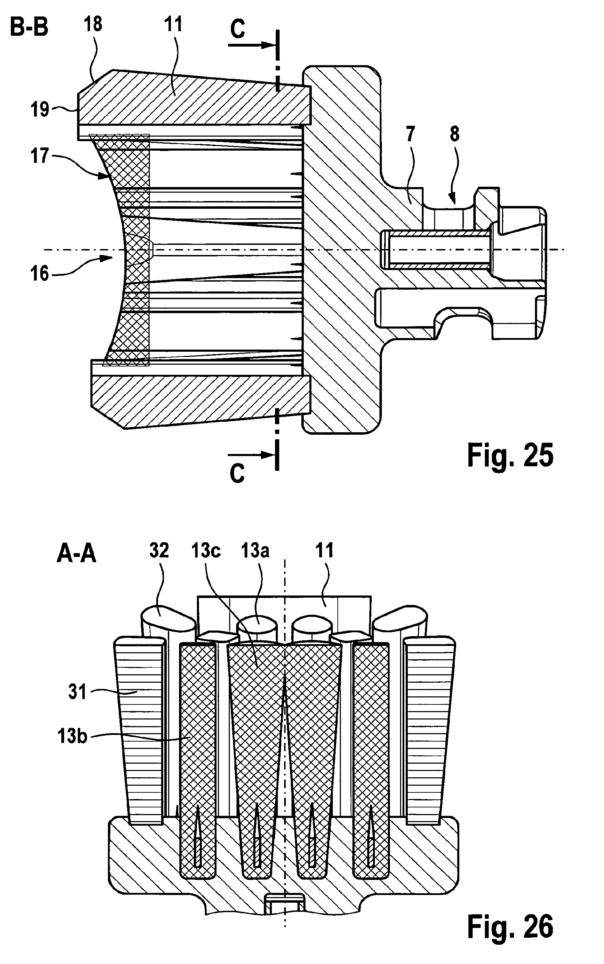

Die Ausführung nach den Figuren 24 bis 26 entspricht im Wesentlichen der vorangehenden Ausführung nach den Figuren 18 bis 20, so dass auf deren vorangehende Beschreibung verwiesen wird. Im Unterschied zu dieser vorhergehenden Ausführung ist die Vertiefung 16 gegenüber den längeren äußeren Borstenbüscheln 11 tiefer ausgebildet, so dass sich ein maximaler Höhenunterschied von etwa 2 mm ergibt.

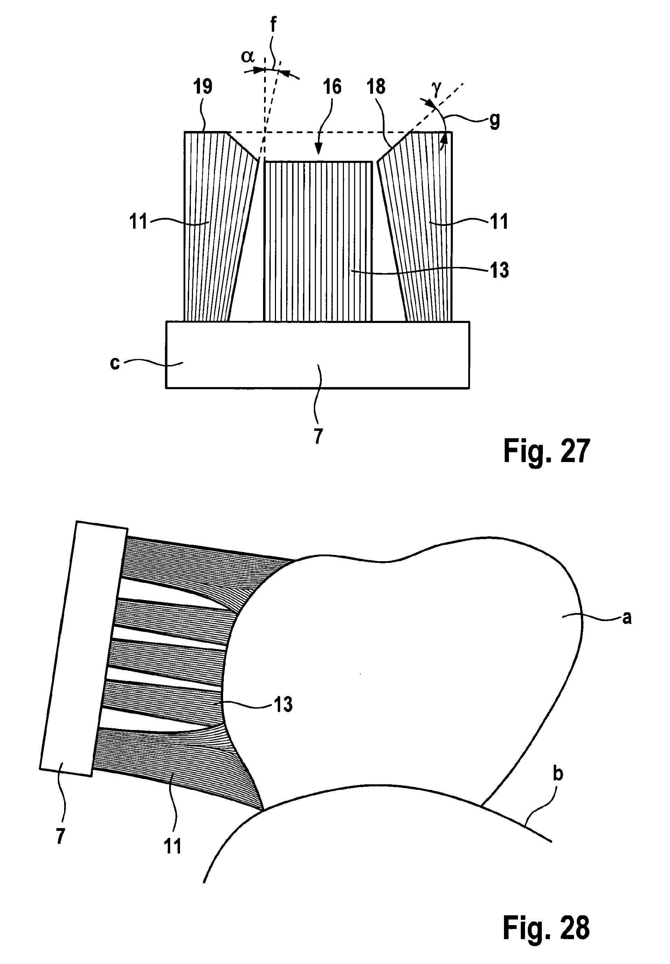

Wie Figur 27 zeigt, können die längeren äußeren Borstenbüschel 11 bzw. kürzere äußere Borsten 31, die in den Sektoren 27 und 28 bzw. 29 und 30 angeordnet sind, die vorzugsweise in der nicht ausgelenkten Neutralstellung des Borstenträgers 7 die Längsachse 26 der Zahnbürste liegen, Abschrägungen 18 auch auf der Innenseite, das heißt auf der der Rotationsachse zugewandten Seite besitzen, wobei die Breite und Abwinklung der Abschrägung 18 im Wesentlichen den zuvor beschriebenen Geometrieverhältnissen entsprechen kann. Wie Figur 27 zeigt, sind auch hier die genannten Borstenbüschel 11 trapezoid ausgebildet, wobei die Schrägstellung jedoch auf der Innenseite vorgesehen ist, das heißt die Innenflanken der Borstenbüschel 11 sind zu einer senkrechten auf den Borstenträger 7 unter einem Spitzenwinkel im Bereich von 3° bis 10° geneigt, während die Außenflanken im Wesentlichen senkrecht zum Borstenträger 7 stehen.

Wie Figur 28 zeigt, schmiegen sich die freien Enden der Borsten durch die genannte Abschrägung 18 auf der Innenseite der längeren äußeren Borstenbüschel 11 besonders günstig an die ballige Zahnflankenkontur an.

Die Variante mit der inneren Abschrägung wird in Zusammenhang mit kürzeren äußeren Borstenbüscheln 31 bevorzugt, weil damit eine bessere Reinigung der supragingivalen Zahnbereiche erreicht werden kann.

In weiterer vorteilhafter Ausbildung und ergänzend oder unabhängig von bzw. zu den Merkmalen der Ansprüche 1 bis 32 der insbesondere kennzeichnenden Merkmale dieser Ansprüche sind die nachfolgenden Weiterbildungen der Erfindung vorgesehen. Bürstenkopf, wobei die Querschnittsfläche der zentralen Borstenbüschel ein ganzes Vielfaches zwischen eins und vier einer Querschnittsfläche der in einem mittleren Bereich angeordneten Borstenbüschel 13a, 13b, 32 aufweist. Bürstenkopf, wobei die Querschnittsfläche der mittleren Borstenbüschel 13a, 13b, 32 eine Größe im Bereich von 1,75 ± 0,25 mm² aufweist. Bürstenkopf, wobei die Querschnittsfläche der Borstenbüschel 11 zu 13a, 13b oder 32 im Verhältnis 4:1 stehen und gleichzeitig die Querschnittsfläche der Borstenbüschel 31 zu 13a, 13b oder 32 im Verhältnis 2:1 stehen. Bürstenkopf, wobei das Verhältnis der Querschnittsfläche der Borstenbüschel 13c zu 13a, 13b oder 32 2:1 beträgt. Bürstenkopf, wobei die Wölbung zylindrisch ausgebildet und mit einem Radius von 8 bis 17 mm oder bevorzugt 11 bis 14 mm versehen ist. Bürstenkopf, wobei die verwendeten Borsten eine Querschnittsfläche im Bereich von 0,01 bis 0,025 mm² bzw. einen Durchmesser von 4,5 bis 7 mil aufweisen. Bürstenkopf, wobei die Bürstenlänge der Bürstenbüschel 11 bezogen auf den Flachabschnitt 19 8,55 ± 0,25 mm betragen. Bürstenkopf, wobei an der tiefsten Stelle der Vertiefung 16, bzw. im Zentralbereich des Borstenfeldes eine Mindestborstenlänge von 6,85 ± 0,25 mm vorgesehen ist. Bürstenkopf, wobei die max. Borstenlänge der Außenborsten 11 des Borstenfeldes zu einer Außenseite 8,8 ± 0,25 und die max. Borstenlänge der gegenüberliegenden Borstenbüschel 11 ebenfalls an der Außenseite des Borstenfeldes 8,15 ± 0,25 mm betragen. Bürstenkopf, wobei die Borsten im zentralen Bereich des Borstenfeldes aufspleißbar, insbesondere mit einer Aufspleißung ausgehend vom Borstenende im Bereich von 1 bis 2,5 mm ausgebildet sind. Bürstenkopf, wobei die Borstenbüschel 11, 31 eine Abschrägung 18 auf der zur Borstenfeldmitte hin gewandten Innenseite aufweisen. Bürstenkopf, wobei die Borstenbüschel im Außenbereich eine trapezförmige Struktur (wie in Fig. 5 dargestellt) aufweisen. Bürstenkopf, wobei eine Spitzwinklung (α) bzw. Neigung der Borstenbüschel 31, 32 kleiner ist als die der Borstenbüschel 11. Bürstenkopf, wobei bevorzugt die Borstenbüschel 11 eine Spitzwinklung (α) vom 3° aufweisen und die Borstenbüschel 31, 32 senkrecht zum Borstenträger 7 stehen. Bürstenkopf, wobei die Borstendichte der Gesamtbüschelquerschnittsfläche 35 bis 50 % zur Oberfläche des Borstenträgers 7 beträgt. Bürstenkopf, wobei die Borstenbüschel 13c mit ihrer Außenseite gegenüber einer Senkrechten auf den Borstenträger spitzwinklig nach innen oder zur Rotationsachse hin im Bereich 1 bis 5° geneigt sind.

## Patentansprüche

1. Bürstenkopf für eine elektrische Zahnbürste (1), mit einem vorzugsweise etwa plattenförmigen Borstenträger (7), der Lagermittel (8) zur beweglichen Lagerung des Borstenträgers (7) aufweist, sowie einer Mehrzahl von Borstenbüscheln (11, 13a, 13b, 13c), die in mehreren ineinanderliegenden Ringen oder Bereichen auf dem Borstenträger (7) angeordnet sind, wobei auf einem äußeren Ring (12) oder Bereich auf gegenüberliegenden Seiten längliche Borstenbüschel (11) mit einem länglichen Büschelquerschnitt angeordnet sind und auf einem mittleren Ring (14) oder mittleren Bereich innerhalb des äußeren Rings (12) oder Bereiches mehrere Borstenbüschel (13a, 13b) angeordnet sind, die jeweils einen Querschnitt kleiner als der Querschnitt der länglichen Borstenbüschel (11) des äußeren Rings (12) oder Bereiches besitzen, **dadurch gekennzeichnet, dass** in einem Zentralbereich innerhalb des genannten mittleren Rings (14) oder Bereiches zumindest ein durch Borstenenden gebildetes Borstenfeld, insbesondere Borstenbüschel (13c), mit einem Querschnitt größer als der Querschnitt der Borstenbüschel (13a, 13b) des mittleren Rings (14) oder Bereiches vorgesehen ist.

2. Bürstenkopf nach dem vorhergehenden Anspruch, wobei die Borstenbüschel (13) des mittleren Rings (14) unterschiedliche Querschnittsformen aufweisen.

3. Bürstenkopf nach einem der vorhergehenden Ansprüche, wobei die Borstenbüschel (13) des mittleren Rings (14) auf gegenüberliegenden Seiten Borstenbüschel mit einem eckigen, vorzugsweise rechteckigen, insbesondere etwa quadratischen Büschelquerschnitt aufweisen.

4. Bürstenkopf nach dem vorhergehenden Anspruch, wobei zumindest ein rechteckiges Borstenbüschel (13b) des mittleren Rings (14) mit seiner Hauptachse derart verdreht ist, dass die Hauptachse (37) spitzwinklig zu einer Tangentialen an den mittleren Ring (14) unter einem Winkel von 3° bis 30°, vorzugsweise etwa 5° bis 15°, geneigt ist.

5. Bürstenkopf nach einem der vorhergehenden Ansprüche, wobei auf dem mittleren Ring (14) auf gegenüberliegenden Seiten zumindest jeweils ein, vorzugsweise zwei, Borstenbüschel (13a) mit einem runden, insbesondere kreisförmigen Büschelquerschnitt vorgesehen ist.

6. Bürstenkopf nach einem der vorhergehenden Ansprüche, wobei die Borstenbüschel (13) des mittleren Rings (14) in etwa jeweils gleich große Büschelquerschnittsflächen besitzen.

7. Bürstenkopf nach einem der vorhergehenden Ansprüche, wobei die Querschnittsfläche der äußeren länglichen Borstenbüschel (11) und des zumindest einen innersten Borstenbüschels (13c) jeweils zumindest doppelt so groß wie die Büschelquerschnittsfläche eines Borstenbüschels (13a, 13b) auf dem mittleren Ring ausgebildet ist.

8. Bürstenkopf nach einem der vorhergehenden Ansprüche, wobei alle runden Borstenbüschel (13a) des mittleren Rings (14) in gegenüberliegenden ersten Sektoren angeordnet sind und alle rechteckigen Borstenbüschel (13b) des mittleren Rings (14) in dazwischen liegenden, einander ebenfalls gegenüberliegenden zweiten Sektoren (29, 30) angeordnet sind, wobei die ersten Sektoren (27, 28) kleiner als die zweiten Sektoren (29, 30) sind.

9. Bürstenkopf nach einem der vorhergehenden Ansprüche, wobei auf dem äußeren Ring (12) mehrere jeweils einander gegenüberliegende Paare von länglichen Borstenbüscheln (11, 31) angeordnet sind, wobei hinsichtlich ihrer Länge und/oder Höhe und/oder Querschnittsfläche verschieden große Paare von Borstenbüscheln (11; 31) vorgesehen sind.

10. Bürstenkopf nach einem der vorhergehenden Ansprüche, wobei auf dem äußeren Ring (12) zwischen den länglichen Borstenbüscheln (11, 31) jeweils zumindest ein Borstenbüschel (32) mit näherungsweise rundem oder quadratischem Querschnitt vorgesehen ist, dessen Querschnittsfläche kleiner als die Querschnittsfläche der länglichen Borstenbüschel (11, 31) ist.

11. Bürstenkopf nach einem der vorhergehenden Ansprüche, wobei im Zentrum des Borstenträgers (7) zwei längliche Borstenbüschel (13c) vorgesehen sind, deren Längsachsen (38) parallel zueinander und/oder parallel zu einer Hauptachse des Borstenträgers (7) verlaufen und/oder parallel zu einer zwei gegenüberliegende längliche Borstenbüschel (11) auf dem äußeren Ring (12) verbindenden Verbindungslinie ausgerichtet sind.

12. Bürstenkopf nach einem der vorhergehenden Ansprüche, wobei der Borstenträger (7) eine runde, von der Kreisform abweichende Form besitzt, insbesondere oval oder ellipsenförmig ausgebildet ist.

13. Bürstenkopf nach einem der vorhergehenden Ansprüche, wobei die Borstenbüschel (11, 13, 31, 32) in der Draufsicht auf den Borstenträger (7) betrachtet symmetrisch bezüglich der Hauptachsen des Borstenträgers (7) und/oder rotationssymmetrisch angeordnet sind, derart, dass die Befestigungsorte der Borstenbüschel am Borstenträger (7) durch eine 180°-Drehung ineinander überführbar sind.

14. Bürstenkopf nach einem der vorhergehenden Ansprüche, wobei die äußeren länglichen Borstenbüschel (11) eine größere Höhe als die inneren Borstenbüschel (13) des mittleren Rings (14) besitzen derart, dass eine zentrale Vertiefung (16) in der von den freien Enden der Borstenbüschel definierten Arbeitsfläche (34) gebildet ist, wobei vorzugsweise zwischen der zentralen Vertiefung (16) und den genannten äußeren Borstenbüscheln (11) mit der größeren Höhe ein stufenförmiger Höhensprung vorgesehen ist.

15. Bürstenkopf nach einem der vorhergehenden Ansprüche, wobei die zentrale Vertiefung (16) einen rinnenförmigen Boden besitzt, der in eine Richtung gewölbt ist und in der dazu senkrechten Richtung im Wesentlichen gerade ausgebildet ist.

16. Bürstenkopf nach dem vorhergehenden Anspruch, wobei die inneren Borstenbüschel (13) unterschiedliche Höhen besitzen, wobei die Höhe der inneren Borstenbüschel (13) mit zunehmendem Abstand der Borstenbüschel von einer Mitte des Borstenträgers (7) zunimmt derart, dass der genannte rinneneförmige Boden (17) der zentralen Vertiefung (16) ausgebildet ist, und wobei die freien Enden der inneren Borstenbüschel (13) geneigte Stirnflächen aufweisen, wobei verschiedene innere Borstenbüschel (13) Stirnflächen mit verschiedenen Neigungen besitzen derart, dass der genannte rinnenförmige Boden (17) ausgebildet ist, vorzugsweise dergestalt, daß die Neigung der Stirnflächen der inneren Borstenbüschel (13) mit zunehmendem Abstand der inneren Borstenbüschel (13) von der Mitte des Borstenträgers (7) zunehmend stärker ausgebildet ist.

17. Bürstenkopf nach einem der vorhergehenden Ansprüche, wobei die freien Enden der inneren Borstenbüschel (13) eine nicht ebene Stirnfläche besitzen, die gewölbt ist derart, dass eine kontinuierliche Bodenwölbung der zentralen Vertiefung (16) ausgebildet ist.

18. Bürstenkopf nach einem der vorhergehenden Ansprüche 15 bis 17, wobei der rinnenförmige Boden (17) der zentralen Vertiefung (16) zu einer Umfangsseite des Borstenträgers (7) hin stärker ansteigend als zur gegenüberliegenden Umfangsseite hin ausgebildet ist, insbesondere eine etwa bananenförmige, asymmetrische Wölbung besitzt.

19. Bürstenkopf nach einem der vorhergehenden Ansprüche, wobei wobei die Höhe der Borstenbüschel auf jeweils einem Ring (12, 14) in Umfangsrichtung des Rings betrachtet zyklisch zu- und abnimmt, insbesondere von einem ersten Minimalwert zu einem zweiten Maximalwert zunimmt, dann wieder auf den ersten Minimalwert abfällt, daraufhin wieder auf einen zweiten Maximalwert ansteigt und schließlich wieder auf den ersten Minimalwert abfällt.

20. Bürstenkopf nach dem einem der vorhergehenden Ansprüche, wobei die äußeren Borstenbüschel (11) an ihren freien Enden Abschrägungen (18) aufweisen, wobei vorzugsweise die Abschrägungen (18) gegenüber einem Flachabschnitt (19) der freien Enden der Borstenbüschel (11) unter einem Winkel Y geneigt sind, der zwischen 20° und 60°, bevorzugt 30° bis 40° beträgt, und/oder sich über 25 % bis 75 % einer Breite W des jeweiligen Borstenbüschels (11) erstrecken, wobei die genannte Breite W die Erstreckung des Borstenbüschels (11) senkrecht zu dessen Längsachse und quer zu der Längserstreckung der jeweiligen Abschrägung (18) meint.

21. Bürstenkopf nach dem vorhergehenden Anspruch, wobei die Abschrägungen (18) an einer außen liegenden Kante der freien Enden der Borstenbüschel (11) vorgesehen sind, die der Umfangsseite des Borstenträgers (7) zugewandt ist.

22. Bürstenkopf nach einem der beiden vorhergehenden Ansprüche, wobei die Abschrägungen (18) jeweils eine ebene Fläche definieren oder einen gekrümmten Verlauf besitzen.

23. Bürstenkopf nach einem der vorhergehenden Ansprüche, wobei die genannten äußeren Borstenbüschel (11) zur Umfangsseite des Borstenträgers (7) hin unter einem spitzen Winkel α im Bereich von 1,5° bis 10°, vorzugsweise 3° bis 5°, geneigt sind.

24. Bürstenkopf nach einem der vorhergehenden Ansprüche, wobei die genannten äußeren Borstenbüschel bei Betrachtung eines Längsschnitts des Borstenbüschels (11) trapezförmig ausgebildet sind, wobei das freie Ende des jeweiligen Borstenbüschels (11) breiter als das innere Ende hiervon ausgebildet ist, wobei vorzugsweise eine Innenflanke der genannten äußeren Borstenbüschel (11), die den inneren Borstenbüschel (13) zugewandt ist, sich im Wesentlichen senkrecht zur Oberfläche des Borstenträgers (7) erstreckt und eine Außenflanke der genannten äußeren Borstenbüschel (7) zur Umfangsseite des Borstenträgers (7) hin unter einem spitzen Winkel zu einer Senkrechten auf den Borstenträger geneigt ist.

25. Bürstenkopf nach einem der vorhergehenden Ansprüche, wobei die äußeren länglichen Borstenbüschel (11) auf einer ersten Umfangsseite des Borstenträgers (7) eine größere Höhe als auf einer zweiten Umfangsseite des Borstenträgers (7) besitzen.

26. Bürstenkopf nach einem der vorhergehenden Ansprüche, wobei die Lagermittel (8) des Borstenträgers (7) eine Rotationsachse (9) für den genannten Borstenträger (7) zur Erzeugung einer rotatorischen Oszillationsbewegung des Borstenträgers definieren.

27. Bürstenkopf nach dem vorhergehenden Anspruch, wobei die Rotationsachse (9) bezüglich einer Mitte des Borstenträgers (7) exzentrisch versetzt angeordnet und/oder gegenüber einer Senkrechten auf den Borstenträger (7) spitzwinklig verkippt angeordnet ist.

28. Bürstenkopf nach einem der beiden vorhergehenden Ansprüche, wobei die äußeren länglichen Borstenbüschel (11) mit ihren freien Enden eine Stirnfläche bilden, die eine längliche Kontur mit einer Längsachse definieren, die einen gekrümmten Verlauf besitzt, insbesondere bogenförmig, vorzugsweise kreisförmig um die Rotationsachse (9) gekrümmt ist, wobei vorzugsweise die äußeren Borstenbüschel (11) an ihren Stirnflächen gekrümmt ausgebildete Abschrägungen (18) besitzen, deren Längsachse sich um die genannte Rotationsachse (9) herum wölbt, insbesondere kreisförmig um die genannte Rotationsachse (9) herum wölbt.

29. Bürstenkopf nach einem der vorhergehenden Ansprüche, wobei der Borstenträger (7) oval oder ellipsenförmig ausgebildet ist und/oder zumindest ein Ring von Borstenbüscheln, vorzugsweise ein äußerer Ring (12) von Borstenbüscheln, ein Oval oder eine Ellipse um die genannte Rotationsachse (9) herum beschreibt.

30. Elektrische Zahnbürste mit einem Bürstenkopf nach einem der vorhergehenden Ansprüche.

31. Elektrische Zahnbürste nach dem vorhergehenden Anspruch, wobei in einer unausgelenkten Neutralstellung sich die zentrale Vertiefung (16) im Borstenfeld quer zur Längsachse (26) der Zahnbürste erstreckt und/oder die längeren äußeren Borstenbüschel (11) in gegenüberliegenden Sektoren des Borstenträgers (7) angeordnet sind, die die Längsachse der Zahnbürste enthalten.

32. Elektrische Zahnbürste nach einem der vorhergehenden Ansprüche, wobei der Borstenträger (7) in einer Ebene angeordnet ist, die zur Zahnbürstenlängsachse (26) spitzwinklig geneigt ist, insbesondere derart, dass der Borstenträger (7) von einem Zahnbürstenhandteil weg gekippt ist.
